(19) Europäisches Patentamt
European Patent Office
Office européen des brevets

(11) **EP 2 448 781 B1**

(12) **FASCICULE DE BREVET EUROPEEN**

(45) Date de publication et mention
de la délivrance du brevet:
**05.06.2013 Bulletin 2013/23**

(21) Numéro de dépôt: **10781947.6**

(22) Date de dépôt: **21.06.2010**

(51) Int Cl.:
***B60K 17/10*** *(2006.01)*

(86) Numéro de dépôt international:
**PCT/FR2010/051246**

(87) Numéro de publication internationale:
**WO 2011/001060 (06.01.2011 Gazette 2011/01)**

(54) **PROCEDE ET DISPOSITIF DE COMMANDE D'UNE BOITE DE VITESSES HYDRAULIQUE AUTOMATIQUE**

VERFAHREN UND VORRICHTUNG ZUR STEUERUNG EINES AUTOMATIKGETRIEBEKASTENS

METHOD AND APPARATUS OF CONTROL OF AN HYDRAULIC AUTOMATIC GEAR BOX

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.06.2009 FR 0954435**

(43) Date de publication de la demande:
**09.05.2012 Bulletin 2012/19**

(73) Titulaire: **Envision Vehicle Engineering Novasio Technology Event 70400 Hericourt (FR)**

(72) Inventeurs:
• **ANDRECK, Gilles**
  **F-25400 Audincourt (FR)**
• **HECKY, Stéphane**
  **F-90000 Belfort (FR)**

(74) Mandataire: **Fréchède, Michel**
  **Cabinet Eurê-Pat**
  **14, boulevard Victor Hugo**
  **78100 Saint Germain en Laye (FR)**

(56) Documents cités:
| | |
|---|---|
| EP-A2- 1 006 298 | DE-A1- 3 107 991 |
| DE-A1- 19 934 782 | FR-A1- 2 416 812 |
| JP-A- 63 305 033 | US-A1- 2007 235 241 |
| US-B1- 6 662 557 | |

# Description

L'invention concerne un procédé et un dispositif de commande d'une boîte de vitesses hydraulique automatique et leur application aux engins ou véhicules de manutention pour charges lourdes ou volumineuses. Les engins ou véhicules précités sont souvent équipés d'une transmission hydrostatique ou hydraulique parfaitement bien adaptée à cette application.

D'une manière générale, on rappelle qu'une transmission hydrostatique comprend une source d'énergie rotative, désignée moteur de service, formée par un moteur électrique ou thermique entraînant une pompe hydraulique, pompe volumétrique de haute précision. Cette dernière opère comme un générateur de débit transformant l'énergie mécanique de rotation en énergie hydraulique ou hydrostatique de débit d'un fluide hydraulique, lequel est véhiculé par des canalisations vers un moteur hydraulique ou des vérins. Ces derniers transforment l'énergie hydraulique en énergie mécanique utile. Un tel dispositif est muni d'une soupape de sécurité, et, en général, d'un dispositif d'inversion du sens de rotation pompe - moteur et de circulation du fluide hydraulique, ce dispositif d'inversion étant désigné manipulateur. Lorsque de tels systèmes sont appliqués aux engins ou véhicules précités, ces derniers comportant un nombre important d'essieux oscillants, équipés ou non de vérins de levage, dans le but d'assurer la motorisation efficace des roues du véhicule deux solutions techniques sont actuellement principalement utilisées.

Une première solution consiste à utiliser des moteurs hydrauliques à cylindrée variable associés à un réducteur mécanique, ayant pour avantage principal d'ajuster la cylindrée en continu sans à-coups et sans commutation, afin d'adapter le couple moteur et la vitesse du véhicule en fonction des configurations des pentes et des charges lorsque l'engin où le véhicule est en déplacement. Un dispositif correspondant de transmission hydraulique de couple moteur aux roues d'un véhicule automobile, permettant la suppression de l'arbre de transmission mécanique et l'utilisation de la totalité du plancher du véhicule automobile, du fait de cette suppression est décrit par la demande de brevet JP 63 305033, publiée le 13/12/1988.

Une deuxième solution consiste à utiliser des moteurs hydrauliques lents à plusieurs cylindrées fixes, en raison de leur robustesse, leur simplicité et leur coût raisonnable.

Les moteurs précités présentent cependant un inconvénient important qui en limite souvent l'usage, la cylindrée ne pouvant être ajustée en continu sans à-coups, coups de bélier, car le passage d'une cylindrée à l'autre est exécuté par commutation. Le fluide hydraulique, constitué par un fluide sensiblement incompressible, transmet quasi intégralement ces derniers et les pics de pression correspondants engendrés, ce qui est néfaste à terme pour l'ensemble de l'installation.

Certaines techniques plus ou moins efficaces ont été proposées, dans le but d'atténuer les pics de pression précités, mais ceux-ci ne peuvent être suffisamment réduits en raison du temps de réponse des composants hydrauliques et provoquent, dans ce cas, des décélérations des véhicules, lesquelles, en présence de charges instables à centre de gravité élevé par rapport aux roues du véhicule, peuvent conduire à des situations dangereuses.

En conséquence, alors que les premières solutions présentent l'inconvénient de la nécessité d'un réducteur mécanique, coûteux en exécution et en maintenance, la deuxième solution ne peut, en aucun cas, prétendre à des applications plus générales, ou permettant de généraliser l'utilisation de tels véhicules à des conditions d'utilisation moins strictes.

La présente invention a pour objet de remédier aux inconvénients des solutions techniques antérieures précitées.

En particulier, un objet de la présente invention est la mise en oeuvre d'un procédé et d'un dispositif de commande d'une boîte de vitesses hydraulique automatique permettant d'adapter le couple moteur exercé et la vitesse de l'engin ou véhicule, alors que ce dernier est en déplacement, en fonction des configurations des pentes ou de topographies locales et des charges transportées, en l'absence de mise en oeuvre de tout réducteur mécanique.

En conséquence, la présente invention a pour objet la mise en oeuvre d'un procédé et d'un dispositif de commande de boîte de vitesses hydraulique automatique présentant une souplesse et une capacité d'utilisation comparables à celles des boîtes de vitesses à engrenages classiques, en l'absence de mise en oeuvre de tout organe réducteur mécanique.

Le procédé de commande d'une boîte de vitesses hydraulique automatique équipée d'une pompe hydraulique et d'au moins un moteur hydraulique à cylindrée ajustable, objet de la présente invention, s'applique à un moteur hydraulique alimenté en fluide hydraulique par un circuit d'entrée et un circuit de retour à partir de la pompe hydraulique couplée mécaniquement à un moteur de service, la pompe hydraulique délivrant en régime établi un débit déterminé de fluide hydraulique au moteur hydraulique.

Il est remarquable en ce qu'il consiste au moins à mesurer la pression du fluide hydraulique sur le circuit d'entrée respectivement de sortie du moteur hydraulique, et, sur réduction respectivement augmentation de la cylindrée active du moteur hydraulique par commutation de cylindrée, entraînant un excédent temporaire de débit de fluide hydraulique de la pompe hydraulique vis-à-vis du moteur hydraulique respectivement un excédent temporaire du débit de fluide hydraulique du moteur hydraulique vis-à-vis de la pompe hydraulique, à dériver l'excédent temporaire de débit de la pompe hydraulique respectivement du moteur hydraulique, en fonction de la pression mesurée du fluide hydraulique, et, à recycler l'excédent temporaire de débit de fluide hydraulique, soit de la pompe soit respectivement du moteur hydraulique, vers le circuit de retour respectivement d'entrée du moteur hydraulique.

Le dispositif de commande d'une boîte de vitesses hydraulique automatique équipée d'une pompe hydraulique et d'au moins un moteur hydraulique à cylindrée ajustable, objet de l'invention, ce moteur hydraulique étant alimenté par un circuit d'entrée et par un circuit de retour à partir de la pompe hydraulique couplée à un moteur de service est mis en oeuvre lorsque la pompe hydraulique délivre, en régime établi réglé par un organe de commande qui peut être une pédale ou un manipulateur, un débit déterminé de fluide hydraulique au moteur hydraulique.

Il est remarquable en ce qu'il comporte au moins des ressources de mesure de la pression du fluide hydraulique en entrée respectivement en sortie du moteur hydraulique et des ressources de dérivation et de recyclage de l'excédent temporaire de débit de la pompe hydraulique respectivement du moteur hydraulique, en fonction de la pression mesurée du fluide hydraulique, soit de la pompe hydraulique soit respectivement du moteur hydraulique, vers le circuit de retour respectivement d'entrée du moteur hydraulique.

Le procédé et le dispositif de commande d'une boîte de vitesses hydraulique automatique, objets de l'invention, trouvent application à tout engin ou véhicule de manutention pour charges lourdes ou volumineuses, en particulier aux véhicules portuaires de transport de conteneurs, aux véhicules de transport d'infrastructures d'aéronefs gros porteurs et finalement à tout véhicule ou engin utilitaire destiné au transport et /ou à la manutention de charges utiles hors normes.

Ils seront mieux compris à la lecture de la description et à l'observation des dessins ci-après, dans lesquels :

- la figure 1a représente à titre illustratif les étapes essentielles de mise en oeuvre du procédé objet de l'invention;
- la figure 1b représente un schéma synoptique d'un dispositif de commande d'une boîte de vitesses hydraulique automatique conforme à l'objet de la présente invention ;
- la figure 2 représente un schéma général d'un exemple d'installation de transmission hydraulique d'un transporteur de fortes charges équipé de 16 moteurs à cylindrée ajustable et d'une pompe hydraulique;
- la figure 3 représente à titre illustratif un schéma de commutation en régime de commutation régulée appliquée, conformément au procédé et au dispositif objets de l'invention tels que représentés en figure 1a et 1b, dans un dispositif tel que représenté en figure 2 ;
- la figure 4a représente à titre illustratif un organigramme des étapes essentielles de fonctionnement du dispositif objet de l'invention lors d'une commande en montée des rapports de vitesses, dans une installation telle que représentée en figure 1 b et figure 2 ;
- la figure 4b représente à titre illustratif un organigramme des étapes essentielles de fonctionnement du dispositif objet de l'invention lors d'une commande en descente des rapports de vitesses en situation normale sans demande de ralentissement, dans une installation telle que représentée en figure 1 b et figure 2 ;
- la figure 4c représente à titre illustratif un organigramme des étapes essentielles de fonctionnement du dispositif objet de l'invention lors d'une commande en descente des rapports de vitesse en situation anormale, dans le cas d'un emballement moteur ;
- la figure 4d représente également à titre illustratif un organigramme des étapes essentielles de fonctionnement du dispositif objet de l'invention lors d'une commande en descente des rapports de vitesses en situation anormale, lorsque la vitesse réelle du véhicule est supérieure à une vitesse théorique correspondant par exemple à la défaillance de la retenue hydrostatique ;
- la figure 4e représente à titre illustratif un organigramme des étapes essentielles de fonctionnement du dispositif objet de l'invention lors d'une commande en descente des rapports de vitesse en situation normale avec demande de ralentissement ;
- la figure 4f représente à titre illustratif un organigramme des étapes essentielles de fonctionnement du dispositif objet de l'invention lors d'une commande en descente des rapports de vitesse en situation de ralentissement brutal mais non total ;
- la figure 4g représente à titre illustratif un organigramme des étapes essentielles de fonctionnement du dispositif objet de l'invention, lors d'une commande en descente des rapports de vitesse en situation de ralentissement brutal total.

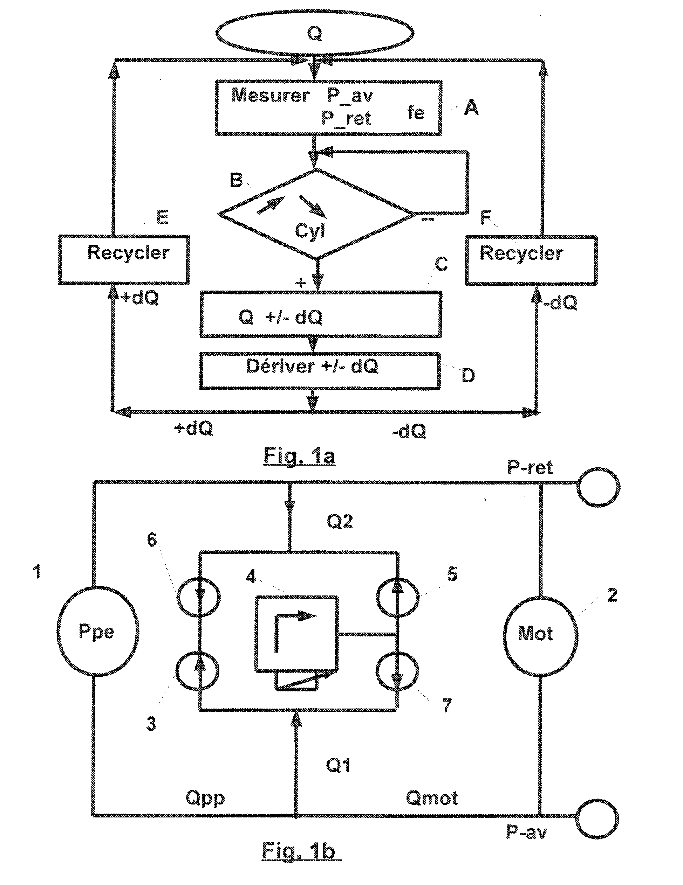

Une description détaillée du procédé et du dispositif de commande d'une boîte de vitesses automatique hydraulique, objets de l'invention, sera maintenant donnée en liaison avec les figures 1a, 1b et les figures suivantes.

En référence à la figure 1a, on indique que le procédé objet de l'invention s'applique à une boîte de vitesses automatique hydraulique équipée, ainsi que représente la figure 1b, d'une pompe hydraulique 1 et d'un ou plusieurs moteurs hydrauliques 2. Chaque moteur hydraulique 2 est alimenté en fluide hydraulique par un circuit d'entrée et un circuit de retour à partir de la pompe hydraulique 1 couplée mécaniquement à un moteur de service, non représenté au dessin. En régime établi, la pompe hydraulique 1 délivre un débit Q déterminé de fluide hydraulique au moteur hydraulique 2.

Ainsi que représenté sur la figure 1 a, le procédé objet de l'invention consiste au moins, en une étape A, à mesurer la pression de fluide hydraulique sur le circuit d'entrée, pression notée P-av, ainsi que sur le circuit de retour du moteur hydraulique 2, pression P-ret, puis sur réduction ou respectivement augmentation B de la cylindrée active du moteur hydraulique 2 par commutation de cylindrée, opération qui entraîne un excédent temporaire de débit de fluide hydraulique de la pompe hydraulique vis-à-vis du moteur hydraulique respectivement un excédent temporaire de débit de fluide hydraulique du moteur hydraulique vis-à-vis de la pompe hydraulique, le débit de fluide est amené, à l'étape C, à la valeur Q +/- dQ. À l'étape B, l'augmentation respectivement la diminution de cylindrée effective, notée Cyl, du moteur hydraulique 2, est représentée par la flèche ascendante respectivement descendante.

L'étape C est suivie d'une étape D consistant à dériver les excédents temporaires de débit de fluide et à recycler ces derniers, soit de la pompe hydraulique 1, soit du moteur hydraulique 2 vers le circuit de retour respectivement d'entrée du moteur hydraulique 2.

Les étapes de recyclage de l'excédent temporaire de débit +dQ et -dQ du fluide hydraulique sont notées E et F sur la figure 1a. On comprend que la désignation d'excédent temporaire de débit +dQ et - dQ désigne le débit d'excédent relatif de la pompe vis-à-vis du moteur et réciproquement, ainsi qu'il sera décrit en liaison avec la figure 1 b.

D'une manière générale, l'étape A consistant à mesurer les pressions du fluide hydraulique est exécutée de manière automatique au moins avant chaque commutation de cylindrée active du moteur hydraulique.

Selon une variante de mise en oeuvre non limitative, l'opération exécutée à l'étape A précitée peut également être exécutée de manière sensiblement continue, c'est-à-dire par échantillonnage à une fréquence d'échantillonnage, notée fe, de valeur déterminée. La fréquence d'échantillonnage peut-être choisie en fonction de la vitesse moyenne du véhicule, ou du temps de réponse moyen de la transmission hydraulique et finalement de tout paramètre caractéristique des composants ou du circuit de transmission hydraulique précité.

On comprend enfin que le procédé objet de l'invention est avantageusement mis en oeuvre à partir du calcul de la variation de pression engendrée sur le circuit d'entrée respectivement de retour du moteur hydraulique, du fait de la commutation de cylindrée active de ce dernier, cette variation de pression apparaissant significative de cette commutation, dans le but de conduire le changement du rapport de vitesse de la boîte de vitesses automatique hydraulique, conforme à l'objet de l'invention, ainsi qu'il sera décrit ultérieurement dans la description.

Un dispositif de commande d'une boîte de vitesses hydraulique automatique, conforme à l'objet de la présente invention, sera maintenant décrit en liaison avec la figure1b.

Sur la figure précitée, on a représenté la pompe hydraulique 1 et le moteur hydraulique 2, un seul moteur hydraulique étant représenté à titre de simplification du dessin, équipant ce dispositif. La pompe hydraulique 1 est couplée à un moteur de service, thermique ou électrique, non représenté au dessin. Le mode opératoire de l'ensemble en régime établi est tel que décrit précédemment en liaison avec la figure 1a.

Ainsi que représenté sur la figure 1b, le dispositif objet de l' invention comprend des ressources de mesure de la pression de fluide hydraulique en entrée et en sortie du moteur hydraulique 2. Les ressources précitées sont représentées par un point de mesure de la pression d'entrée P-av et par un point de mesure de la pression de retour P-ret.

Il comprend en outre, de manière remarquable, des ressources de dérivation et de recyclage de l'excédent temporaire de débit de la pompe hydraulique 1 respectivement du moteur hydraulique 2, en fonction de la pression mesurée du fluide hydraulique. Les ressources de dérivation et de recyclage précitées sont constituées par un circuit bidirectionnel spécifique sensible aux seuls excédents temporaires de débit de la pompe hydraulique et du moteur hydraulique et branché en parallèle sur la pompe hydraulique 1 et sur le moteur hydraulique 2, par l'intermédiaire des canalisations d'alimentation d'entrée et de retour du moteur hydraulique 2.

De manière plus spécifique, on indique que les ressources de mesure de la pression peuvent comporter un capteur de pression de fluide hydraulique placé en prise sur le circuit d'entrée respectivement le circuit de retour de l'alimentation du moteur hydraulique et une unité centrale de gestion et de commande de mesures gérant chaque capteur de pression. L'unité centrale de commande et de gestion ECU permet de réguler la pression du fluide hydraulique par l'intermédiaire d'un bloc de régulation de pression incluant un limiteur de pression proportionnel, non représenté au dessin.

Selon un mode de mise en oeuvre préférentielle du dispositif de commande d'une boîte de vitesses hydraulique automatique conforme à l'objet de l'invention, on indique que les ressources de dérivation et de recyclage de l'excédent temporaire de débit comportent préférentiellement, ainsi que représenté en figure 1 b, une première branche formée par une première 3 et une deuxième 5 soupape antiretour, connectées selon un premier même sens de circulation du fluide hydraulique. Les soupapes antiretour précitées sont reliées par l'intermédiaire d'un circuit de commande proportionnelle de pression du fluide hydraulique 4, jouant le rôle du limiteur de pression précité.

Le dispositif de commande comporte en outre une deuxième branche formée par une première 6 et une deuxième 7 soupape antiretour connectées selon un deuxième même sens de circulation du flux hydraulique. Le deuxième sens de circulation Q2 est opposé au premier sens de circulation Q1. En outre, la première 6 et la deuxième 7 soupape antiretour de la deuxième branche sont reliées par le circuit de commande proportionnelle de pression 4. Enfin, la première branche et la deuxième branche, incluant chacune le circuit de commande proportionnelle de pression, sont configurées selon un circuit en pont.

Le mode opératoire du dispositif de commande tel que représenté en figure 1 b est explicité ci-après, étant précisé que la commutation de cylindrée active du ou d'un moteur hydraulique entraîne la commutation corrélative de cylindrée active de la pompe hydraulique avec un temps de retard :

- en situation normale de régime établi, le débit Qpp de la pompe hydraulique 1 est égal à celui Qmot du moteur hydraulique 2, soit

$$Qpp = Qmot \ ;$$

- sur réduction de la cylindrée active du moteur hydraulique ou de l'un des moteurs hydrauliques, lorsque l'installation de transmission comprend plusieurs moteurs hydrauliques, ainsi qu'il sera décrit ultérieurement dans la description, au moment de la commutation et en attendant que la pompe ajuste sa cylindrée, le débit de la pompe est excédentaire par rapport au débit capable de traverser le ou les moteurs hydrauliques. Il s'établit donc un débit excédentaire +dQ égal à Q1 ou à Q2 selon le sens de circulation du fluide hydraulique commandé par le manipulateur M au travers des soupapes antiretour et du circuit de commande proportionnelle de pression 4, selon la relation (1) :

$$Qpp = Qmot + Q1 \ (ou \ Q2) \ ;$$

- sur augmentation de la cylindrée active du moteur hydraulique ou de l'un des moteurs hydrauliques, lorsque l'installation de transmission comprend plusieurs moteurs hydrauliques, au moment de la commutation, en attendant que la pompe ajuste sa cylindrée, le débit du moteur hydraulique 2 est excédentaire par rapport au débit capable de traverser la pompe hydraulique 1. Il s'établit donc un débit excédentaire -dQ selon le sens de circulation du fluide hydraulique au travers des soupapes antiretour et du circuit de commande proportionnelle de pression 4 selon la relation (2) :

$$Qmot = Qpp + Q1 \ (ou \ Q2).$$

En référence aux relations (1) et (2) précitées, on comprend que, le débit de la pompe hydraulique en régime établi étant pris comme référence, les notations +dQ et -dQ de la figure 1a correspondent à :

$$+dQ = +Q1 \ (ou \ Q2) \ de \ la \ relation \ (1) \ ;$$

$$-dQ = -Q1 \ (ou \ Q2) \ de \ la \ relation \ (2).$$

Dans tous les cas, les débits excédentaires temporaires recyclés correspondent ainsi au débit temporaire Q1 ou Q2.

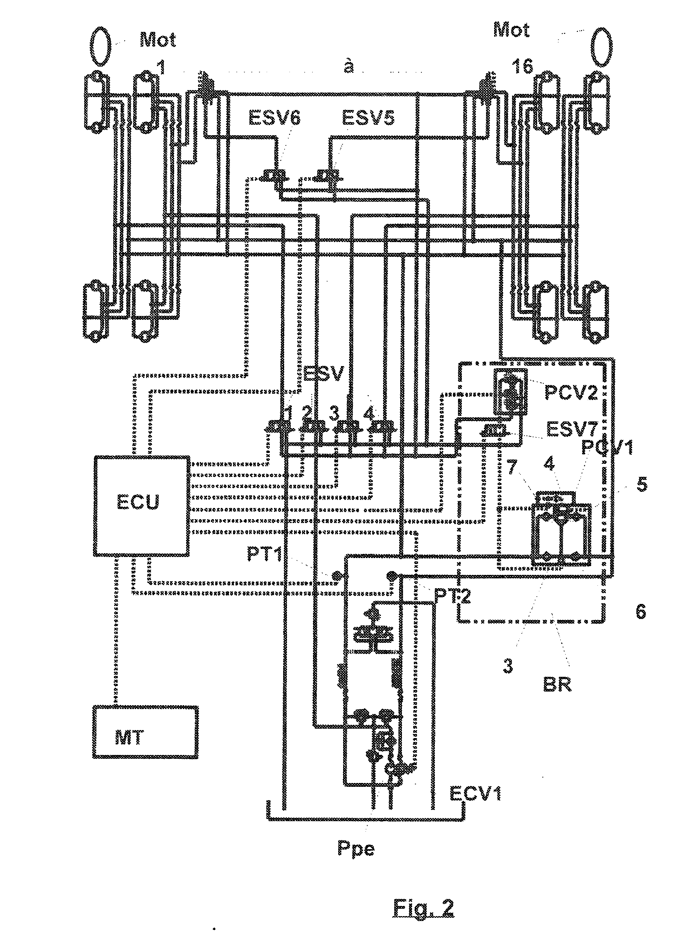

On comprend en particulier que le procédé et le dispositif de commande d'une boîte de vitesses hydraulique automatique objets de l'invention, grâce à la mesure de pression en entrée et en sortie du moteur hydraulique et au calcul de la pression obtenue après commutation de cylindrée active Acyl du ou des moteurs, permettent, par la régulation, de contrôler les variations de pression du passage en commutation de cylindrée, c'est-à-dire les pressions transitoires et les coups de bélier engendrés du fait de la commutation des rapports de vitesse de la boîte de vitesses automatique hydraulique, ainsi qu'il sera décrit ci-après en liaison avec la figure 2 et les figures suivantes.

Sur la figure 2, les références ci-après désignent :

- PT1 : transmetteur de pression sens avant ;
- PT2 : transmetteur de pression sens arrière ;
- ECV1 : servocommande de cylindrée pompe de translation ;
- Mot : moteur hydraulique 2 à plusieurs cylindrées commutables;
- Ppe: pompe hydraulique 1 ;
- ESV1 à ESV4 : distributeur de pilotage de changement de cylindrée de la ligne d'essieu 1 à 4;
- ESV5, ESV6 : distributeur de pilotage de mise en bipasse des lignes d'essieu 5 et 6 ;
- ESV7 : distributeur de verrouillage régulation;
- HSV1 à HSV2 : distributeur de mise en bipasse de la ligne d'essieu 2,3 ;
- PCV1 : limiteur de pression piloté ;
- PCV2 : limiteur de pression proportionnel de pilotage ;
- ECU : système ou unité centrale de commande et de gestion ;
- BR : bloc de régulation et d'adaptation ;
- MT : moteur thermique ou autre de service.

Le dispositif de commande objet de l'invention, tel que représenté en figure 1 b est intégré dans l'installation représentée en figure 2 dans le bloc de régulation et d'adaptation BR, ainsi que représenté au dessin. L'ensemble est géré par l'unité centrale de gestion ECU.

L'engin ou véhicule est équipé des installations telles que représentées en figure 2. On considère cette installation comme comportant, à titre d'exemple non limitatif, un circuit de transmission hydrostatique pour véhicules constitués par un transporteur pour fortes charges, équipé de 16 moteurs hydrauliques Mot à deux cylindrées et d'une pompe hydraulique ajustable Ppe. La commutation de cylindrée du ou des moteurs hydrauliques Mot provoque la commutation correspondante de la pompe hydraulique Ppe, avec toutefois un temps de retard induisant les débits excédentaires temporaires précédemment décrits.

L'engin ou véhicule étant à l'arrêt, le démarrage est effectué avec l'ensemble des moteurs hydrauliques Mot à la plus grande cylindrée, de façon à bénéficier du couple maximum. La variation de vitesse est alors obtenue par la mise en cylindrée de la pompe d'alimentation, et, le cas échéant, selon la régulation choisie, l'accélération du moteur de service MT.

Le débit maximum disponible au niveau des moteurs de translation Mot du véhicule ou engin est obtenu lorsque la pompe hydraulique 1 est à 100 % de cylindrée active et que le moteur de service MT est à sa vitesse maximum.

Pour augmenter la vitesse de déplacement du véhicule au-delà de cette première limite il faut réduire la cylindrée totale active de l'un ou plusieurs des moteurs hydrauliques Mot en cylindrée réduite ou mettre un ou plusieurs de ces derniers en bipasse.

Dans l'installation représentée en figure 2, le véhicule ou engin transporteur pour fortes charges est équipé de moteurs d'hydrauliques à 2 cylindrées. Ces moteurs sont commutés en cylindrée ligne d'essieu par ligne d'essieu de la ligne 1 à la ligne 4, c'est-à-dire par groupe de quatre moteurs Mot mis en bipasse également par ligne d'essieu, de la ligne de 2 à la ligne 3, les lignes d'essieu 1 et 4 ne pouvant être mises en bipasse afin de conserver un couple de traction suffisant pour permettre l'obtention de la vitesse rapide de déplacement.

On comprend ainsi que le procédé et de dispositif de commande d'une boîte de vitesses hydraulique automatique objets de l'invention peuvent être mis en oeuvre lorsque l'engin ou le véhicule dispose d'un moteur hydraulique à deux cylindrées mais peuvent être utilisés quel que soit le nombre de moteurs hydrauliques Mot. Le choix du nombre de moteurs dont la cylindrée active est commutée, ou qui sont mis en bipasse à chaque commutation, dépend de paramètres de topographie locale telle que pentes du sol, vitesse de déplacement à atteindre et masse des charges transportées.

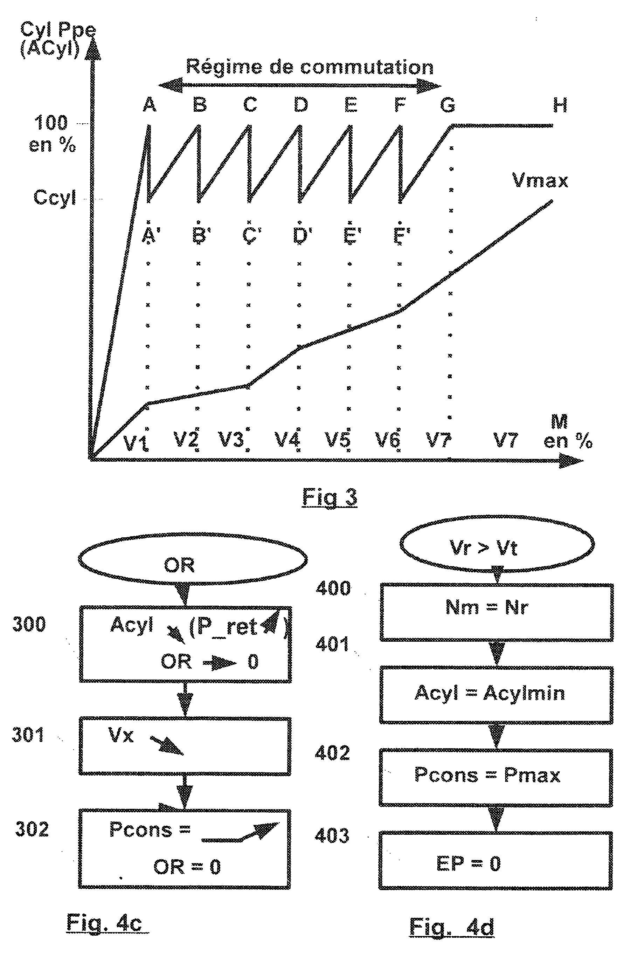

Une description détaillée du processus de régulation de la commutation de cylindrée active du moteur hydraulique est maintenant donnée en liaison avec la figure 3 et les figures suivantes.

Dans l'installation de transmission hydraulique, telle que représentée en figure 2, on dispose des paramètres suivants:

- Vr vitesse réelle de déplacement de l'engin ou véhicule;
- position du manipulateur M.
- Les paramètres ou variables à commander sont désignés par :
- Vt : vitesse théorique;
- Acyl : cylindrée active de la pompe hydraulique ;
- choix du rapport de vitesse Vx, c'est-à-dire de la cylindrée active des moteurs hydrauliques à un instant donné.

Ainsi que représenté sur la figure 3, les rapports de vitesse Vx, x = 1,2,3,4,5,6,7, de manière similaire à une boîte automatique, mais en l'absence d'engrenage ou réducteur, correspondent à une variation de la vitesse de déplacement suivant le calcul du graphe représenté sur la figure précitée. Sur cette figure, l'axe des abscisses est gradué en pourcentage de la position du manipulateur M et l'axe des ordonnées est gradué en pourcentage de cylindrée active de la pompe, Cyl en %, (Acyl) .

Du point origine 0 au point A, la régulation correspond à un processus standard avec variation du régime du moteur de service de 0 à un régime proche du régime du couple maximum et variation de la cylindrée de la pompe de 0 à 100%.

La vitesse atteinte au point A de cylindrée maximale de la pompe est la vitesse V1.

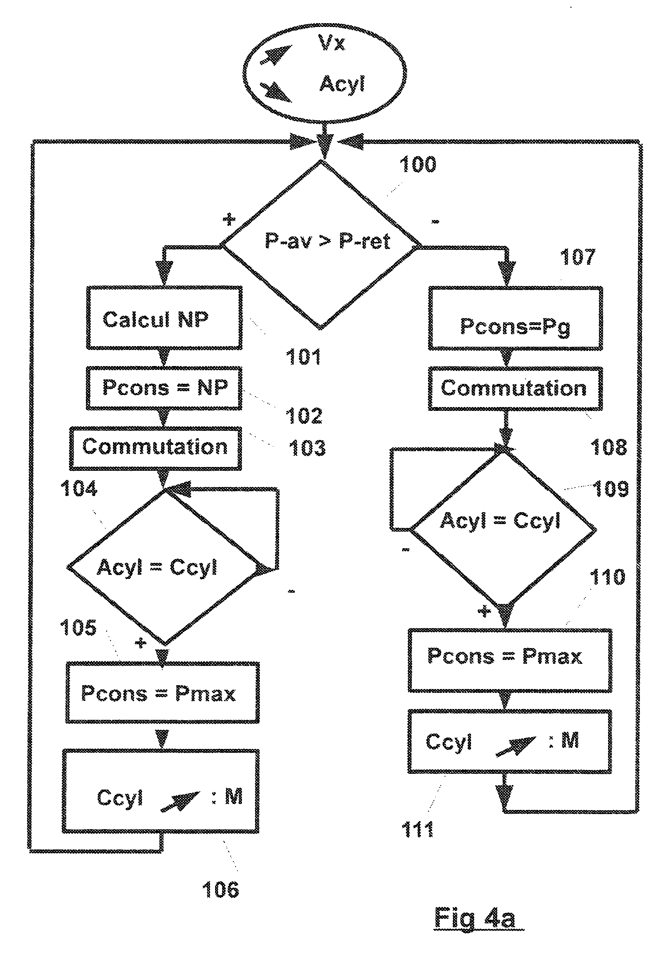

Les conditions nécessaires pour monter le rapport des vitesses de la valeur V1 à V7 sont décrites ci-après, en liaison avec la figure 4a.

Les points de commutation atteints A,B,C,D,D,E,F sont obtenus dans des conditions opératoires machines correctes, dans les conditions de contrôle ci-après. Au-delà du point G, la cylindrée active de la pompe ayant atteint son maximum, le signal délivré par le manipulateur M provoque l'accélération du moteur de service du régime de commutation au régime nominal.

Le processus de régime de commutation est alors exécuté successivement entre les points A à G ainsi que représenté en figure 4a .

Le passage de cylindrée est exécuté en diminution de cylindrée, notée flèche descendante Acyl, pour entraîner l'augmentation des rapports de vitesse, notée flèche ascendante Vx.

Si la pression du fluide hydraulique dans le circuit d'entrée est supérieure à la pression du fluide hydraulique dans le circuit de retour, étape 100, P-av > P-ret, on calcule 101 la nouvelle pression NP établie du fait de la commutation après changement de vitesse. La nouvelle pression NP correspond à la nouvelle pression d'entrée après commutation. Elle est calculée par l'unité centrale de commande et de gestion ECU, laquelle permet en outre de commander de manière automatique la commutation de cylindrée de la pompe hydraulique et du ou des moteurs hydrauliques, dans toutes les situations d'utilisation.

L'étape 101 est suivie d'une transmission 102, Pcons = NP, de la nouvelle pression établie calculée comme valeur de consigne au bloc de régulation de pression BR. L'unité centrale de commande et de gestion ECU procède à l'exécution de la commutation 103.

Sur atteinte 104 par la pompe hydraulique 1 de sa valeur de consigne de cylindrée active Ccyl, Acyl = Ccyl, correspondant aux points A',B',C',D',E',F' de la figure 3, on remonte 105 la valeur de consigne de pression à la valeur maximum et la valeur de consigne de cylindrée active de la pompe hydraulique 1 en correspondance de la position du manipulateur M, selon un fonctionnement classique. À l'étape 105, l'opération de remontée est notée Pcons = Pmax. L'augmentation de la valeur de consigne de cylindrée active de la pompe hydraulique 1 en correspondance du manipulateur M est représentée à l'étape 106 par Ccyl flèche ascendante : M.

Un retour à l'étape 100 permet la poursuite du processus pour les points de commutation suivants, jusqu'au point de commutation G.

Grâce à l'étape 101 de calcul de la nouvelle pression NP et à l'application de cette dernière comme valeur de consigne, tout choc hydraulique ou coup de bélier est sensiblement évité. La pression du circuit hydraulique étant déterminée, le temps de réponse de la pompe hydraulique n'intervient plus.

Au contraire, si à l'étape 100 la pression du fluide hydraulique dans le circuit d'entrée est inférieure à la pression du fluide hydraulique dans le circuit le retour, on transmet 107 une valeur de pression de gavage Pg comme valeur de consigne au bloc de régulation de pression BR. L'opération correspondante à l'étape 107 est notée Pcons = Pg et suivie de la commande de commutation 108. Sur atteinte 109 par la pompe hydraulique 1 de sa consigne de cylindrée active, cette atteinte étant notée Acyl = Ccyl, correspondant aux points A',B',C',D', E',F' de la figure 3, on rétablit 110 la pression de consigne à la pression maximale, Pmax, Pcons = Pmax, et l'unité centrale de commande et de gestion ECU remonte 111 la consigne de cylindrée de la pompe hydraulique 1 en correspondance de la position du manipulateur M, selon un mode de fonctionnement classique, successivement entre chaque rapport de vitesse. À l'étape 111 l'opération correspondante est notée Ccyl flèche ascendante : M. Le retour à l'étape 100 représente l'exécution successive pour chaque rapport de vitesse.

L'application de la pression de gavage Pg comme valeur de consigne supprime tout choc hydraulique, la retenue hydrostatique est supprimée pendant le changement de cylindrée de la pompe et le temps de réponse de cette dernière n'intervient plus. L'atteinte par la pompe hydraulique de sa consigne de cylindrée peut être effectuée avec une temporisation dont la valeur est calculée en tenant compte du pourcentage de variation de cylindrée exécutée.

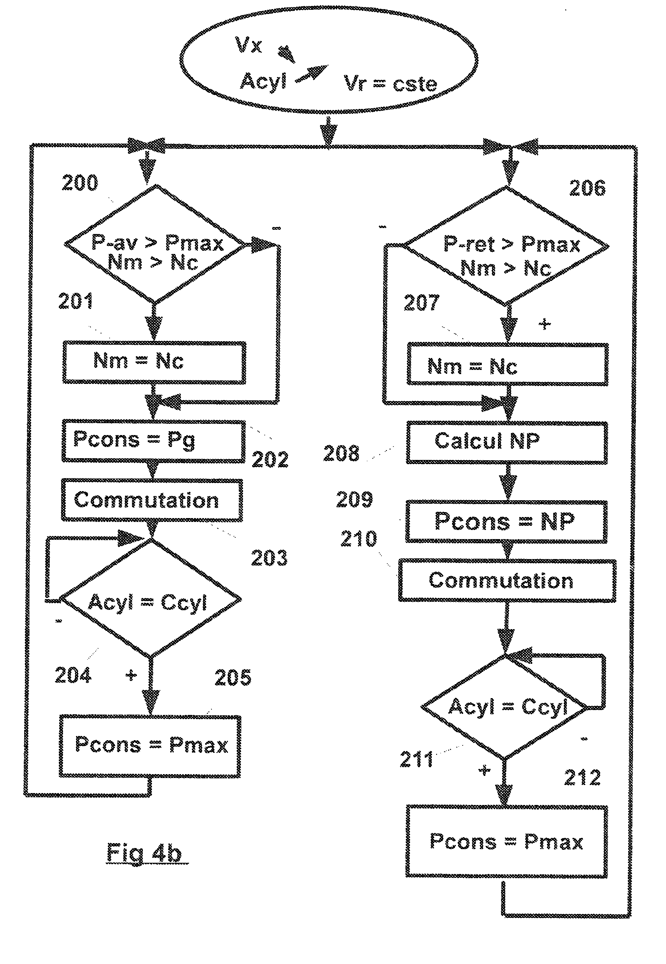

Les conditions nécessaires pour descendre les rapports de vitesse de la boîte de vitesses sans demande de ralentissement d'allure, en situation normale, sont décrites en liaison avec la figure 4b.

La descente des rapports de vitesse est représentée par Vx flèche descendante. La commutation de cylindrée active est représentée pour l'augmentation de cylindrée par Acyl flèche ascendante. L'absence de demande de ralentissement d'allure du véhicule est représentée par Vr = cste.

Si, étape 200, la pression du fluide hydraulique dans le circuit d'entrée est supérieure à la pression maximale, P-av > Pmax et si le régime Nm du moteur de service est supérieur au régime de commutation Nc, Nm > Nc, on ramène, 201, le régime du moteur de service au régime de commutation, Nm = Nc, et l'unité centrale de commande et de gestion ECU transmet 202 la valeur de pression de gavage Pg comme valeur de consigne de cylindrée active de la pompe, Pcons = Pg, au bloc de régulation de pression BR. L'unité centrale ECU commande 203 la commutation.

Dès que la pompe hydraulique 1 a atteint ,204, la valeur de consigne de cylindrée maximale, Acyl = Ccyl, on remonte, 205, la valeur de consigne de pression à la pression maximale Pmax. L'opération sur la figure 4b illustrée par la flèche de retour à l'étape 200 représente le passage successif aux points de commutation A' à F'.

Au contraire, si la pression de retour du fluide hydraulique est supérieure à la pression maximale, étape 206, P-ret > Pmax, et si le régime Nm du moteur de service MT est supérieur au régime de commutation, Nm > Nc, pour des points de commutation de cylindrée active successive A',B',C',D',E',F' la commutation de cylindrée active se faisant en augmentation de cylindrée, on ramène 207 le régime du moteur de service au régime de commutation, Nm = Nc, et, on calcule 208 la nouvelle pression NP établie du fait de la commutation après changement de vitesse. Puis l'unité centrale ECU transmet 209 la nouvelle valeur de pression NP établie calculée comme valeur de consigne, Pcons = NP, au bloc de régulation de pression BR. La commutation est exécutée 210.

Dès que la pompe hydraulique 1 atteint, 211, sa valeur de consigne de cylindrée active maximale, Acyl = Ccyl, après une temporisation telle qu'indiquée précédemment, on remonte, 212, la valeur de consigne de pression à la valeur de pression maximale, Pcons = Pmax, selon un processus classique. La flèche de retour à l'étape 206 représente l'exécution successive de la descente des rapports de vitesse.

Les conditions nécessaires à la régulation des rapports de vitesse lors d'une situation anormale, telle que l'emballement du moteur de service MT, sont décrites en liaison avec la figure 4c. La situation d'emballement est notée OR.

Dans cette situation, on réduit, 300, la cylindrée active de la pompe hydraulique 1, cette réduction étant représentée par Acyl flèche descendante, pour provoquer une montée en pression du circuit d'alimentation, cette montée étant notée P-ret flèche ascendante, en supprimant l'emballement soit directement, OR flèche à droite 0, ou par passage, 301, vers les rapports de vitesse inférieure successivement jusqu'à disparition de l'emballement. L'opération de passage des rapports de vitesse inférieure est notée Vx flèche descendante.

Ensuite, on remonte 302 la consigne de pression par commande à partir de l'unité centrale de commande et de gestion ECU en suivant une rampe de freinage jusqu'à disparition de l'emballement. L'opération correspondante à l'étape 302 est représentée par Pcons = rampe ascendante OR = 0.

Lorsque la situation d'emballement a disparu, un retour au contrôle de régulation normale peut être effectué.

Les conditions nécessaires à la régulation des rapports de vitesse lors d'une situation anormale, dans laquelle la vitesse réelle du véhicule Vr est supérieure à une vitesse théorique Vt est écrite en liaison avec la figure 4d.

Dans cette situation, la vitesse réelle du véhicule est notée Vr > Vt. La vitesse Vr est donnée par un capteur de vitesse de déplacement du véhicule, en prise sur une roue folle de ce dernier. La vitesse théorique Vt est une vitesse déterminée de sécurité du véhicule, calculée en fonction du rapport de vitesse Vx enclenché. Cette situation est susceptible d'apparaître en cas de défaillance de la retenue hydrostatique de l'ensemble constituant la transmission hydraulique.

Ainsi que représenté sur la figure 4d précitée, on procède, 400, par commande par l'unité centrale de commande ECU, à la mise au ralenti du moteur de service. Cette opération est notée Nm = Nr. Puis on amène, 401, par commande par l'unité centrale de commande ECU, la cylindrée de la pompe hydraulique 1 à sa valeur minimale 0%. Cette opération est notée Acyl = Acylmin. Puis on fixe ,402, la consigne de pression au bloc de régulation à sa valeur maximale 100%, opération notée Pcons = Pmax.

On coupe ensuite, 403, l'alimentation électrique de la bobine du distributeur de verrouillage de la régulation de pression et de la bobine du distributeur de freinage. Cette opération est notée EP = 0.

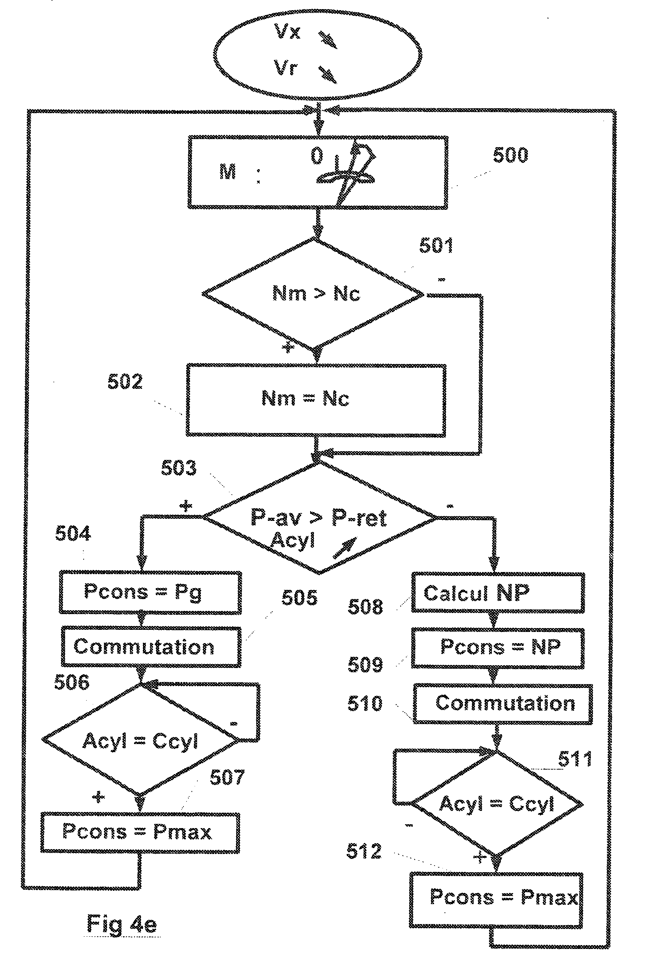

Les conditions nécessaires pour descendre les rapports de vitesse en ralentissement normal sont décrites ci-après, en liaison avec la figure 4e.

Sur la figure précitée la descente des rapports de vitesse est notée Vx flèche descendante et le ralentissement normal est noté Vr flèche descendante, Vr désignant la vitesse du véhicule ou engin.

Dans cette situation, l'opérateur du véhicule place, 500, le manipulateur M en diminution de vitesse pour créer la naissance d'un écart de poursuite réduit entre la vitesse de déplacement théorique et la vitesse réelle du véhicule. Cette opération est représentée à l'étape 500 précitée par M : logo du levier du manipulateur déplacé de sa position actuelle à une position intermédiaire à la position neutre 0 d' arrêt.

En référence au graphe de régulation de la commutation de cylindrée représentée en figure 3, les conditions précitées sont les suivantes.

Si, étape 501, le régime Nm du moteur de service est supérieur au régime de commutation Nc, Nm > Nc, ont réduit, 502, le régime de ce dernier pour le ramener au régime de commutation. À l'étape 502 l'opération correspondante est notée Nm = Nc. Dans la négative la flèche de contournement de l'étape 502 permet de passer directement à l'étape suivante 503. Les points de commutation atteints, en référence à la figure 3, sont les points A',B',C',D', E',F'.

Si, à l'étape 503, la pression P-av sur le circuit d'entrée de la pompe hydraulique 1 est supérieure à la pression de retour P-ret, la commutation de cylindrée se faisant en augmentation de cylindrée, Acyl flèche ascendante, on transmet, 504, une valeur de pression égale à la pression de gavage Pg comme valeur de consigne au bloc de régulation de pression BR. Cette opération est notée Pcons = Pg à l'étape 504 précitée. La commutation est exécutée 505 par l'unité centrale ECU.

Dès que la pompe hydraulique 1 atteint, 506, sa consigne de cylindrée maximale,100% , on remonte 507 la valeur de consigne de pression au maximum, selon un mode de fonctionnement classique. La flèche de retour à l'étape 500 illustre l'exécution des commutations de cylindrée successives A' à F', en fonction de la position réelle du manipulateur M..

Sinon, si, à l'étape 503, la pression de retour de la pompe hydraulique 1 est supérieure à la pression d'entrée de cette dernière, soit en réponse négative à l'étape 503, la commutation de cylindrée se faisant en augmentation de cylindrée, préalablement à la commutation, on calcule, 508, la nouvelle pression NP qui s'établit du fait du changement de vitesse. À l'étape 508 précitée cette opération est représentée par Calcul NP.

On applique alors, 509, la nouvelle pression NP comme valeur de consigne de pression au bloc de régulation de pression BR, Pcons = NP, et l'on commande 510 l'exécution de la commutation.

Dès que, à l'étape 511, la pompe hydraulique 1 a atteint sa consigne de cylindrée maximale 100%, après une temporisation telle que précédemment décrite, on procède, 512, à la remontée de la consigne de pression à la valeur maximale selon un fonctionnement classique, Pcons = Pmax. Le retour à l'étape 500 Permet de poursuivre le processus en fonction de la position réelle du manipulateur M.

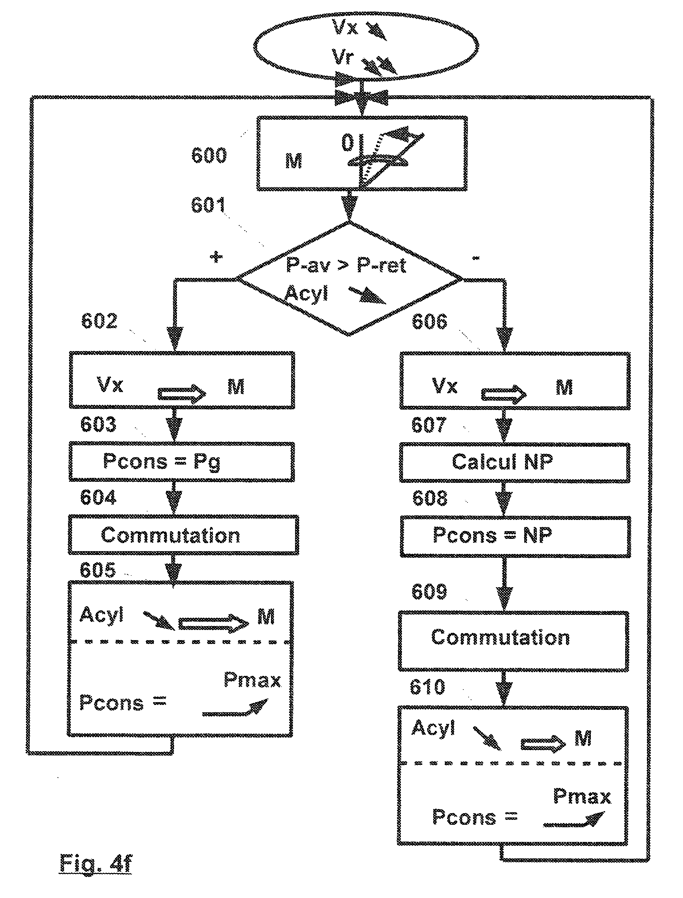

Les conditions nécessaires pour descendre les rapports de vitesse en ralentissement brutal, mais non total, sont décrites en liaison avec la figure 4f.

Sur la figure 4f, le ralentissement brutal, mais non total, est représenté par Vr double flèche descendante. Dans cette situation, l'opérateur du véhicule place, 600, le manipulateur M en position proche du neutre 0 pour créer la naissance d'un écart de poursuite important entre la vitesse de déplacement théorique et la vitesse réelle du véhicule. Cette opération est notée M : logo du manipulateur ramené à la position proche du neutre 0 à l'étape précitée.

La commutation de cylindrée de la pompe hydraulique est exécutée en diminution de cylindrée, Acyl flèche descendante.

A l'étape 601, si la pression d'arrivée P-av est supérieure à la pression de retour P-ret, P-av > P-ret, l'unité centrale de commande et de gestion ECU procède au passage immédiat, 602, sur le rapport de vitesse correspondant à la position du manipulateur M. Cette opération à l'étape précitée est notée Vx flèche à droite M. Ce passage peut correspondre à un passage à des rapports de vitesse non contigus successifs.

Préalablement à la commutation, on transmet, 603, au bloc de régulation de pression BR une valeur de consigne de pression égale à la pression de gavage. Cette opération est notée à l'étape précitée Pcons = Pg. Puis l'unité centrale de commande et de gestion ECU commande 604 l'exécution de la commutation de cylindrée de la pompe hydraulique 1.

Dans le but de ne pas dégrader la rampe de décélération et d'effectuer un freinage rapide du véhicule, on diminue, 605, immédiatement la cylindrée de la pompe hydraulique 1 suivant une rampe engendrée de manière classique et on amène la cylindrée de cette dernière à la valeur correspondant à la position du manipulateur M. À l'étape 605, l'opération correspondante est représentée par Acyl flèche descendante flèche à droite M. Simultanément, on remonte la consigne de pression appliquée par l'unité centrale de commande et de gestion ECU au bloc de régulation de pression jusqu'à son maximum, avec une rampe de montée en pression rapide, indépendante toutefois de la rampe de décélération hydrostatique. À l'étape 605 l'exécution de la rampe de montée est réputée simultanée et représentée par Pcons = rampe ascendante Pmax.

Sinon, si, 601, la pression d'arrivée P-av est inférieure à la pression de retour P-ret, P-av < P-ret, soit sur réponse négative à l'étape 601, on procède au passage immédiat, 606, sur le rapport de vitesse Vx correspondant à la position du manipulateur M. Cette opération est notée Vx flèche à droite M. Préalablement à la commutation, on calcule, 607, la nouvelle pression NP qui s'établit du fait du changement de vitesse puis on l'applique 608 par l'unité centrale de commande et de régulation ECU et l'on procède 609 à la commutation.

Dans le but de ne pas dégrader la rampe de décélération et d'effectuer un freinage rapide du véhicule ou engin, on procède, 610, à une diminution immédiate de la cylindrée de la pompe suivant une rampe de diminution opérant de manière classique, et on amène la cylindrée active de la pompe hydraulique 1 à la valeur correspondant à la position du manipulateur M. Cette opération est représentée à l'étape précitée par Acyl flèche descendante flèche à droite M.

Simultanément, on procède à la remontée de la consigne de pression appliquée au bloc de régulation de pression BR, jusqu'à sa valeur maximale, avec une rampe de pression rapide, indépendante toutefois de la rampe de décélération hydrostatique. Cette opération est représentée par Pcons = rampe ascendante Pmax. Le retour à l'étape 600 à partir de l'étape 610 permet de poursuivre le processus en fonction de la position réelle du manipulateur M.

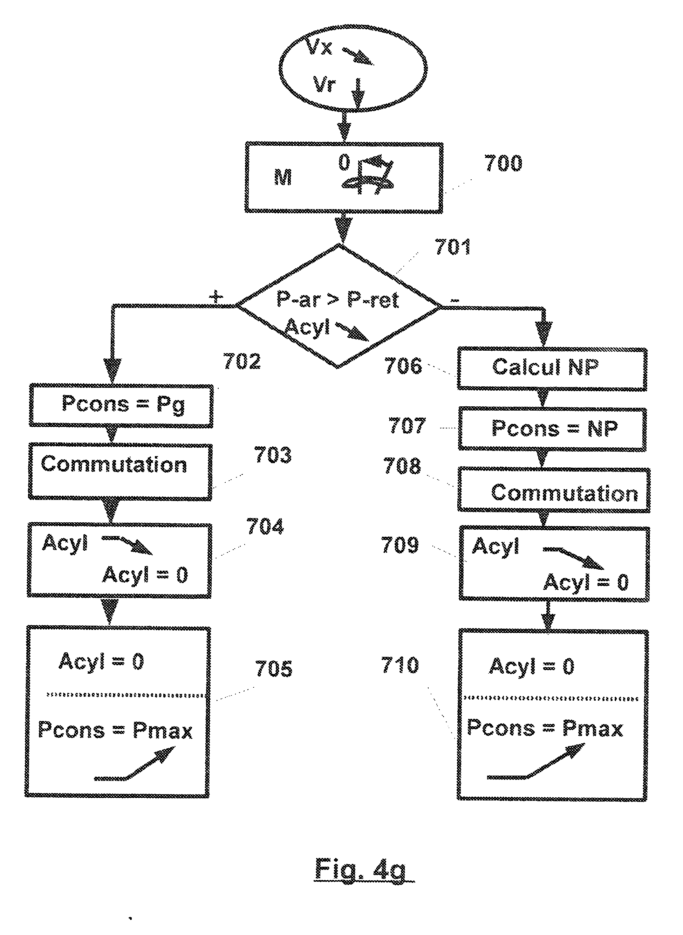

Les conditions nécessaires pour descendre les rapports de vitesse en ralentissement brutal total sont décrites en liaison avec la figure 4g. Sur la figure 4g le ralentissement brutal total est représenté par Vr flèche descendante verticale.

Dans cette situation, l'opérateur du véhicule place, 700, le manipulateur M en position neutre 0 par un retour rapide. La commutation de cylindrée est effectuée en diminution de cylindrée, notée Acyl flèche descendante, à partir de la cylindrée maximale avec un arrêt rapide souhaité.

Si, étape 701, la pression d'arrivée P-av est supérieure à la pression de retour P-ret, P-av > P-ret, préalablement à la commutation, l'unité centrale de commande et de gestion ECU transmet 702 au bloc de régulation de pression BR une valeur de consigne de pression égale à la pression de gavage Pg, opération représentée par Pcons = Pg. L'unité centrale de commande ECU procède 703 à la commande d'exécution de la commutation de cylindrée.

Dans le but de ne pas dégrader la rampe de décélération et d'effectuer un freinage rapide du véhicule, on procède immédiatement 704 à une diminution de la cylindrée active de la pompe hydraulique suivant une rampe classiquement engendrée et on amène la cylindrée active de la pompe hydraulique 1 à la valeur nulle. À l'étape 704, l'opération correspondante est notée Acyl rampe descendante Acyl = 0.

Simultanément à la diminution de la cylindrée active de la pompe hydraulique vers la valeur zéro, on remonte, 705, la valeur de la pression de consigne appliquée par l'unité centrale de commande et de régulation ECU au bloc de régulation de pression BR jusqu'à sa valeur maximale, au moyen d'une rampe de pression rapide, indépendante toutefois de la pente de décélération hydrostatique. Cette opération à l'étape 705 est représentée Pcons = Pmax rampe ascendante.

Si, au contraire, à l'étape 701, la pression d'arrivée P-av est inférieure à la pression de retour P-ret, P-av < P-ret, branche négative de l'étape 701, préalablement à la commutation on calcule, 706, la nouvelle pression NP établie du fait du changement de vitesse et on applique 707 la nouvelle pression NP au bloc de commande et de régulation BR. L'unité centrale de commande et de gestion ECU commande, 708, l'exécution de la commutation de cylindrée.

Dans le but de ne pas dégrader la rampe de décélération et d'effectuer un freinage rapide on diminue, 709, immédiatement la cylindrée active de la pompe hydraulique en amenant cette dernière à la valeur nulle. L'opération correspondante est représentée par Acyl rampe descendante Acyl = 0. Simultanément à la valeur nulle de la cylindrée active de la pompe hydraulique on remonte, 710, la valeur de pression de consigne au niveau du bloc de régulation de pression BR, jusqu'à sa valeur maximum, avec une rampe rapide indépendante toutefois de la rampe de décélération hydrostatique. À l'étape 710 cette opération est notée Pcons = Pmax rampe ascendante.

Dans un but de sécurité, lorsque la pression de consigne appliquée est la pression maximale, il est avantageux de procéder à la coupure de l'alimentation électrique de la bobine du distributeur de verrouillage de la régulation de pression afin d'être certain que la pression maximale est disponible.

D'une manière plus spécifique, on indique que, de même que dans le cas de la commande en montée des rapports de vitesse Vx décrit en liaison avec la Fig. 4a, lors de la commande en descente des rapports de vitesse, telle que décrite en Fig. 4b, 4 e, 4f et 4g, les opérations de régulation de la pression préalablement à l'opération de commutation de cylindrée, soit à la pression de gavage Pg, soit à la valeur de la nouvelle pression NP engendrée du fait de la commutation , 202 et 209 Fig. 4b respectivement 504 et 508, 509 Fig. 4 e, 603 et 607, 608 Fig. 4f , 702 et 706, 707 Fig.4g permettent de manière remarquable de supprimer tout choc hydraulique ou coup de bélier. La pression du fluide hydraulique est déterminée et régulée, l'excédent de débit temporaire du ou des moteurs hydrauliques s'ajoutant au débit de la pompe hydraulique sans choc hydraulique. Le temps de réponse de la pompe hydraulique n'intervient plus. L'atteinte par la pompe hydraulique de sa valeur de consigne de cylindrée peut être exécutée avec une valeur de temporisation tenant compte du pourcentage de variation de cylindrée exécutée, ainsi que décrit précédemment.

L'invention couvre en outre un programme d'ordinateur formé par une suite d'instructions mémorisées sur un support de mémorisation et exécutables par un ordinateur ou un calculateur dédié embarqué dans un véhicule ou engin équipé d'une transmission hydraulique et d'une boîte de vitesses hydraulique automatique. Lorsque les instructions précitées sont exécutées, le programme permet la mesure des pressions P-av et P-ret en entrée et retour du moteur hydraulique et la commande de régulation de pression du fluide hydraulique soit à partir de la pression de gavage Pg , soit à partir de la nouvelle pression calculée NP du fait de la commutation, ainsi que décrit précédemment avec les figures 4a à 4g. Le programme et le calculateur sont intégrés à l'unité centrale de commande et de gestion ECU.

Le procédé et le dispositif objets de l'invention permettent de s'affranchir du temps de réponse de la pompe hydraulique équipant la transmission hydraulique. Un temps de réponse long compatible avec les charges instables peut être employé, ce qui apparaît d'un très grand intérêt en cas d'arrêt d'urgence, lorsque, par exemple, la rampe de décélération engendrée par l'unité centrale de commande et de gestion ECU devient inexistante. Enfin, lorsque le véhicule est susceptible d'aborder des pentes importantes, la valeur de consigne de cylindrée active de la pompe hydraulique engendrée par l'unité centrale de commande et de gestion ECU peut être maintenue à sa valeur, lors des commutations de cylindrée.

## Revendications

1. Procédé de commande d'une boîte de vitesses hydraulique automatique équipée d'une pompe hydraulique (1) et d' au moins un moteur hydraulique (2) à cylindrée ajustable, le moteur hydraulique (2) étant alimenté en fluide hydraulique par un circuit d'entrée et un circuit de retour à partir de la pompe hydraulique (1) couplée mécaniquement à un moteur de service, la pompe hydraulique (1) délivrant en régime établi un débit déterminé de fluide hydraulique au moteur hydraulique (2), **caractérisé en ce que** ce procédé consiste au moins à :

 -- mesurer (A) la pression du fluide hydraulique sur le circuit d'entrée (P_av) respectivement de sortie (P_ret) du moteur hydraulique (2), et, sur réduction respectivement augmentation de la cylindrée active du moteur hydraulique (2) par commutation de cylindrée, entraînant (C) un excédent temporaire (+dQ) de débit de fluide hydraulique de la pompe hydraulique (1) vis-à-vis du moteur hydraulique (2), respectivement un excédent temporaire (-dQ) du débit de fluide hydraulique du moteur hydraulique (2) vis-à-vis de la pompe hydraulique (1),
 -- dériver (D) l'excédent temporaire (+dQ) de débit de la pompe hydraulique (1) respectivement (-dQ) du moteur hydraulique (2), en fonction de la pression mesurée du fluide hydraulique ; et,
 -- recycler (E,F) l'excédent temporaire de débit de fluide hydraulique (+dQ,-dQ)), soit de la pompe (1) soit respectivement du moteur hydraulique (2), vers le circuit de retour respectivement d'entrée du moteur hydraulique (2).

2. Procédé selon la revendication 1, **caractérisé en ce que** l'opération consistant à mesurer (A) la pression du fluide hydraulique est exécutée au moins avant chaque commutation de cylindrée active du moteur hydraulique.

3. Procédé selon la revendication 1 ou 2, **caractérisé en ce que** l'opération de mesure (A) de la pression du fluide hydraulique est effectuée sensiblement en continu.

4. Dispositif de commande d'une boîte de vitesses hydraulique automatique équipée d'une pompe hydraulique (1) et d'au moins un moteur hydraulique (2) ,à cylindrée ajustable, le moteur hydraulique (1) étant alimenté par un circuit d'entrée et par un circuit de retour à partir de la pompe hydraulique (1) couplée à un moteur de service, la pompe hydraulique (1) délivrant en régime établi réglé par un organe de commande un débit déterminé de fluide hydraulique au moteur hydraulique (2), **caractérisé en ce que** ce dispositif de commande comporte au moins :

-- des moyens de mesure de la pression du fluide hydraulique en entrée (P_av) respectivement en sortie (P_ret) du moteur hydraulique (2) ;
-- des moyens de dérivation et de recyclage (3,4,5,6,7) de l'excédent temporaire (+dQ) de débit de la pompe hydraulique (1) respectivement (-dQ) du moteur hydraulique (2), en fonction de la pression mesurée du fluide hydraulique, soit de la pompe hydraulique (1) soit respectivement du moteur hydraulique (2) vers le circuit de retour respectivement d'entrée du moteur hydraulique (2).

5. Dispositif selon la revendication 4, **caractérisé en ce que** les moyens de mesure de la pression comportent au moins:

-- un capteur de pression (P_av)du fluide hydraulique placé en prise sur le circuit d'entrée respectivement de retour (P_ret) de l'alimentation du moteur hydraulique (2);
-- une unité centrale (ECU) de gestion et de commande de mesure gérant chaque capteur de pression.

6. Dispositif selon l'une des revendications 4 ou 5, **caractérisé en ce que** les moyens de dérivation et de recyclage de l'excédent temporaire de débit de la pompe hydraulique (1) respectivement du moteur hydraulique (2) comprennent au moins :

-- une première branche formée par une première (3) et une deuxième (5) soupape anti-retour connectées selon un premier même sens de circulation du fluide hydraulique et reliées par l'intermédiaire d'un circuit (4) de commande proportionnelle de pression du fluide hydraulique ;
-- une deuxième branche formée par une première (6) et une deuxième (7) soupape anti-retour connectées selon un deuxième même sens de circulation du fluide hydraulique, le deuxième sens de circulation étant opposé au premier sens de circulation ; la première (6) et la deuxième (7) soupape anti-retour de la deuxième branche étant reliées par le circuit (4) de commande proportionnelle de pression, la première branche, la deuxième branche et le circuit (4) de commande proportionnelle de pression étant configurés selon un circuit en pont.

7. Dispositif selon l'une des revendications 4 à 6, **caractérisé en ce que** pour une commande en montée des rapports de vitesse de la boîte de vitesses automatique (Fig. 4), ce dispositif comportant en outre un bloc de régulation (BR) de pression,

-- si (100+) la pression (P_av)du fluide hydraulique dans le circuit d'entrée est supérieure à la pression (P_ret) du fluide hydraulique dans le circuit de retour, la commutation de cylindrée se faisant en diminution de cylindrée :
-- -- on calcule (101) la nouvelle pression établie du fait de la commutation après changement de vitesse ;
-- -- on transmet (102) la nouvelle pression établie calculée comme valeur de consigne (Pcons = NP) au bloc de régulation de pression puis on effectue la commutation (103); et, sur atteinte (104) par la pompe hydraulique (1) de sa valeur de consigne de cylindrée active,
-- --on remonte (105) la valeur de consigne de pression à la valeur maximum (Pcons = Pmax) et la valeur de consigne de cylindrée active (Ccyl) de la pompe hydraulique (1) en correspondance de la position de l'organe de commande (M), selon un fonctionnement classique ; sinon,
-- si (100 -) la pression du fluide hydraulique dans le circuit d'entrée (P_av)est inférieure à la pression de fluide hydraulique (P_ret) dans le circuit de retour, la commutation de cylindrée se faisant en diminution de cylindrée :
-- -- on transmet (107) une valeur de pression de gavage (Pg) comme valeur de consigne (Pcons = Pg) au bloc de régulation de pression puis on effectue (108) la commutation; et, sur atteinte (109) par la pompe hydraulique (1) de sa consigne de cylindrée active établie (Acyl=Ccyl),
-- -- on rétablit (110) la pression de consigne à la pression maximum (Pcons = Pmax) et on remonte (111) la consigne de cylindrée de la pompe hydraulique en correspondance de la position de l'organe de commande (M) selon le mode de fonctionnement classique, successivement entre chaque rapport de vitesse.

8. Dispositif selon l'une des revendications 4 à 7, **caractérisé en ce que** pour une commande en descente des rapports de vitesse (Vx) de la boîte de vitesses sans demande de ralentissement d'allure, en situation normale (Fig. 4b):

-- si (200) la pression du fluide hydraulique (P_av) dans le circuit d'entrée est supérieure à la pression maximale (Pmax) et si le régime (Nm) du moteur de service est supérieur au régime (Nc) de commutation, on ramène (201) le régime du moteur de service au régime de commutation (Nm = Nc) et pour des points de commutation de cylindrée active successive correspondant à une cylindrée active de la pompe hydraulique (1) inférieure à la cylindrée maximale, la commutation de cylindrée active se faisant en augmentation de cylindrée :
-- -- on transmet (202) la valeur de pression de gavage (Pg) comme valeur de consigne (Pcons=Pg) au bloc de régulation de pression (BR); et, dès que la pompe hydraulique (1) a atteint la valeur de consigne de cylindrée maximale (Acyl = Ccyl), on remonte (205) la valeur de consigne de pression à la pression maximum (Pcons = Pmax); sinon,

-- si (206) la pression de retour (P_ret) du fluide hydraulique est supérieure à la pression maximale (Pmax), et si le régime (Nm) du moteur de service est supérieur au régime (Nc) de commutation, on ramène le régime du moteur de service au régime de commutation (Nm = Nc); et, pour des points de commutation de cylindrée active successive correspondant à une cylindrée active maximale et la commutation de cylindrée active se faisant en augmentation de cylindrée :

-- -- on calcule (208) la nouvelle pression (NP) établie du fait de la commutation après changement de vitesse ; et,

-- -- on transmet (209) la nouvelle valeur de pression (NP) calculée comme valeur de consigne (Pcons = NP) au bloc de régulation (BR); et, dès que la pompe (1) a atteint (211) sa valeur de consigne de cylindrée active maximale (Acyl=Ccyl),

-- -- on remonte I(212) a valeur de consigne de pression (Pcons) à la valeur de pression maximale (Pmax), (Pcons = Pmax) selon un mode de fonctionnement classique.

9. Dispositif selon l'une des revendications 4 à 8, **caractérisé en ce que** lors d'une situation anormale (Fig. 4c) d'emballement (OR) du moteur de service:

   -- on réduit (300) la cylindrée active de la pompe hydraulique (1) pour provoquer une montée en pression du circuit d'alimentation en supprimant l'emballement (OR) directement ou par passage vers les rapports de vitesses inférieures successivement, jusqu'à disparition de l'emballement (OR), et après un changement de rapport de vitesse (301),

   -- on remonte (302) la consigne de pression (Pcons) par commande à partir de l'unité centrale de commande et de gestion (ECU) en suivant une rampe de freinage, jusqu'à disparition de l'emballement (OR=0).

10. Dispositif selon l'une des revendications 4 à 9, **caractérisé en ce que** lors d'une situation anormale de vitesse réelle (Vr) du véhicule supérieure à une vitesse théorique (Vt) (Fig. 4d), sur défaillance de la retenue hydrostatique,

    -- on place (400) le moteur de service au ralenti (Nm = Nr);

-- on amène (401) la cylindrée active (Acyl) de la pompe hydraulique (1) à sa valeur minimale (Acylmin) ;

-- on fixe (402) la valeur de consigne de pression (Pcons) par l'intermédiaire de l'unité centrale de commande et de gestion (ECU) à sa valeur maximale (Pmax) (Pcons = Pmax);

-- on coupe (403) l'alimentation électrique (EP = 0) de la bobine du distributeur de verrouillage de la régulation de pression et du distributeur de freinage.

11. Dispositif selon l'une des revendications 4 à 10, **caractérisé en ce que** pour une commande en descente des rapports de vitesse (Vx) de la boîte de vitesses avec ralentissement normal d'allure Vr) (Fig. 4e) :

    -- on place (500) l'organe de commande (M) en diminution de vitesse pour engendrer la naissance d'un écart de poursuite réduit entre la vitesse de déplacement théorique et la vitesse réelle du véhicule; et si (501+)le régime (Nm) du moteur de service est supérieur au régime (Nc) de commutation on ramène (502) le régime du moteur de service au régime (Nc) de commutation (Nm = Nc) et pour des points de commutation de cylindrée active successive correspondant à une cylindrée active de la pompe hydraulique inférieure à la cylindrée maximale,

    -- si (503+) la pression du fluide hydraulique dans le circuit d'entrée (Pav) est supérieure à la pression (Pret) du fluide hydraulique dans le circuit de retour, la commutation de cylindrée active se faisant en augmentation de cylindrée :

    -- -- on transmet (504) la valeur de pression de gavage (Pg) comme valeur de consigne de pression (Pcons) (Pcons = Pg) au bloc de régulation de pression (BR) puis on effectue (505) la commutation, et, dès que la pompe hydraulique (1) atteint (506+) la valeur de consigne de cylindrée maximale (Acyl = Ccyl), on remonte (507) la valeur de consigne de pression (Pcons) à la valeur de pression maximum (Pmax) (Pcons = Pmax); sinon,

    -- si (503 -) la pression (P_ret) du fluide hydraulique dans le circuit de retour est supérieure à la pression (Pav) du fluide dans le circuit d'entrée, la commutation de cylindrée active se faisant en augmentation de cylindrée :

    -- -- on calcule (508) la nouvelle pression établie (NP) du fait de la commutation après changement de vitesse ; et,

    -- -- on transmet (509) la nouvelle valeur de pression calculée (NP) comme valeur de consigne (Pcons) au bloc de régulation (BR) de pression; et, dès que la pompe hydraulique (1) a atteint sa valeur de consigne de cylindrée active maximale (Acyl = Ccyl),

-- -- on remonte (512) la valeur de consigne de pression (Pcons) à la valeur de pression maximale (Pmax) selon un mode de fonctionnement classique.

**12.** Dispositif selon l'une des revendications 4 à 11, **caractérisé en ce que** pour une commande en descente des rapports de vitesse (Vx) de la boîte de vitesses avec ralentissement brusque d'allure (Vr) (Fig. 4f) :

-- on place (600) l'organe de commande (M) en position intermédiaire pour engendrer la naissance d'un écart de poursuite important entre la vitesse de déplacement théorique et la vitesse réelle du véhicule;et,

-- si (601+) la pression (Pav) du fluide hydraulique dans le circuit d'entrée est supérieure à la pression (P_ret) du fluide hydraulique dans le circuit de retour, la commutation de cylindrée active se faisant en diminution de cylindrée,

-- -- on passe (602) immédiatement sur le rapport correspondant à la position de l'organe de commande (M);

-- -- préalablement à la commutation (604), on transmet une valeur de pression égale à la pression de gavage (Pg) comme valeur de consigne (Pcons) (Pcons = Pg) au bloc de régulation (BR) de pression;

-- -- on diminue (605) immédiatement la cylindrée active (Acyl) de la pompe hydraulique (1) pour amener la cylindrée active de cette dernière à la valeur de celle correspondant à la position actuelle de l'organe de commande (M); et, simultanément,

-- -- on remonte (605) la consigne de pression (Pcons) à l'unité centrale de commande et de gestion (ECU) avec une rampe de pression rapide indépendante de la rampe de décélération hydrostatique ; sinon,

-- si (601 -) la pression (P_av)du fluide hydraulique dans le circuit d'entrée est inférieure à la pression (P_ret) du fluide hydraulique dans le circuit de retour;

-- -- on passe (606) immédiatement sur le rapport correspondant à la position de l'organe de commande (M);

-- -- préalablement à la commutation (609), on calcule (607) la nouvelle pression établie (NP) du fait du changement de vitesse et on l'applique (608) à la pression de consigne (Pcons = NP);

-- -- on diminue (610) immédiatement la cylindrée active de la pompe hydraulique (Acyl) suivant la rampe de fonctionnement classique à la valeur correspondant à la position actuelle du manipulateur (M); et, simultanément,

-- -- on remonte la consigne de pression (Pcons) au bloc de régulation de pression jusqu'à son maximum (Pmax), avec une rampe rapide indépendante de la rampe de décélération hydrostatique.

**13.** Dispositif selon l'une des revendications 4 à 12, **caractérisé en ce que** pour une commande en descente du rapport de vitesse (Vx) de la boîte de vitesses avec ralentissement brutal total d'allure (Vr) (Fig. 4g):

-- on place (700) l'organe de commande (M) en position neutre (0); et,

-- si (701+) la pression (P_av)du fluide hydraulique dans le circuit d'entrée est supérieure à la pression (P_ret) du fluide hydraulique dans le circuit de retour, la commutation de cylindrée active se faisant en diminution de cylindrée,

-- -- préalablement à la commutation (703), on transmet une valeur de consigne de pression (Pcons) égale à la pression de gavage (Pg) , et, afin d'effectuer un freinage rapide,

-- -- on diminue (704) immédiatement la cylindrée (Acyl) de la pompe hydraulique (1) suivant une rampe déterminée,

-- -- on amène (705) la cylindrée active (Acyl) de la pompe hydraulique (1) à la valeur nulle, et, simultanément,

-- -- on remonte (705) la valeur de consigne de pression (Pcons) appliquée au bloc de régulation (BR) à sa valeur maximum (Pmax), avec une rampe de pression rapide indépendante de la rampe de décélération hydrostatique ; sinon,

-- si (701 -) la pression (P-av) du fluide hydraulique dans le circuit d'entrée est inférieure à la pression (P_ret) du fluide hydraulique dans le circuit de retour,

-- -- préalablement à la commutation (708), on calcule (706) la nouvelle pression établie (NP) du fait du changement de vitesse et on l'applique (707) au bloc de régulation (BR);

-- -- on diminue (709) immédiatement la cylindrée active (Acyl) de la pompe hydraulique (1) suivant une rampe classique pour amener la cylindrée active de la pompe hydraulique à la valeur nulle ; et simultanément,

-- -- on remonte (710) la consigne de pression (Pcons) à l'unité centrale de commande et de gestion jusqu'à son maximum (Pmax) avec une rampe rapide, indépendante de la rampe de décélération hydrostatique.

**14.** Dispositif selon l'une des revendications 4 à 13, **caractérisé en ce que**, pour un véhicule susceptible d'aborder des pentes importantes, la consigne de cylindrée active de la pompe hydraulique est maintenue à sa valeur.

**15.** Programme d'ordinateur mettant en oeuvre le procédé selon les revendications 1 à 3 respectivement le dispositif selon l'une des revendications 4 à 14, ce programme d'ordinateur comprenant des instructions étant mémorisé sur un support de mémorisation et exécutable par un ordinateur ou un calculateur dédié embarqué dans un véhicule muni d'une transmission hydraulique et d'une boîte de vitesses hydraulique automatique équipée d'une pompe (1) et d'un moteur hydraulique (2) à cylindrée ajustable, **caractérisé en ce que** lors de l'exécution de ce programme et de ces instructions ces derniers permettent la mesure de la pression (P_av) du fluide hydraulique en entrée et en sortie (P_ret) du moteur hydraulique (2) et la commande de régulation de pression, soit à partir d'une pression de gavage (Pg), soit à partir de la nouvelle pression (NP) du fluide hydraulique calculée du fait de la commutation de cylindrée.

**Patentansprüche**

**1.** Verfahren zur Steuerung eines automatischen Hydraulikgetriebes, das mit einer Hydraulikpumpe (1) und mit mindestens einem Hydraulikmotor (2) mit variablem Hubraum ausgestattet ist, wobei der Hydraulikmotor (2) über eine Eingangsleitung und eine Rückleitung ausgehend von der Hydraulikpumpe (1) mit Hydraulikfluid versorgt wird, die mechanisch mit einem Dienstmotor verbunden ist, wobei die Hydraulikpumpe (1) im stationären Zustand eine bestimmte Durchflussmenge von Hydraulikfluid an den Hydraulikmotor (2) liefert, **dadurch gekennzeichnet, dass** dieses Verfahren mindestens darin besteht:

- den Druck des Hydraulikfluids in der Eingangsleitung (P_av) bzw. Ausgangsleitung (P_ret) des Hydraulikmotors (2) zu messen, und bei einer Verkleinerung bzw. Vergrößerung des aktiven Hubraums des Hydraulikmotors (2) durch Hubraum-Umschaltung (A), die einen vorübergehenden Überschuss (+dQ) der Durchflussmenge von Hydraulikfluid der Hydraulikpumpe (1) gegenüber dem Hydraulikmotor (2) bzw. einen vorübergehenden Überschuss (-dQ) der Durchflussmenge von Hydraulikfluid des Hydraulikmotors (2) gegenüber der Hydraulikpumpe (1) bewirkt (C),
- den vorübergehenden Überschuss (+dQ) von Durchflussmenge der Hydraulikpumpe (1) bzw. (-dQ) des Hydraulikmotors (2) abhängig vom gemessenen Druck des Hydraulikfluids abzuleiten (D); und
- den vorübergehenden Überschuss der Durchflussmenge von Hydraulikfluid (+dQ,-dQ) entweder der Pumpe (1) oder des Hydraulikmotors (2) zur Rückleitung bzw. Eingangsleitung des Hydraulikmotors (2) zurückzuführen (E, F).

**2.** Verfahren nach Anspruch 1, **dadurch gekennzeichnet, dass** der Vorgang, der darin besteht, den Druck des Hydraulikfluids zu messen (A), mindestens vor jeder aktiven Hubraum-Umschaltung des Hydraulikmotors ausgeführt wird.

**3.** Verfahren nach Anspruch 1 oder 2, **dadurch gekennzeichnet, dass** der Vorgang des Messens (A) des Drucks des Hydraulikfluids im Wesentlichen kontinuierlich ausgeführt wird.

**4.** Vorrichtung zur Steuerung eines automatischen Hydraulikgetriebes, das mit einer Hydraulikpumpe (1) und mit mindestens einem Hydraulikmotor (2) mit variablem Hubraum ausgestattet ist, wobei der Hydraulikmotor (1) von einer Eingangsleitung und von einer Rückleitung ausgehend von der mit einem Dienstmotor verbundenen Hydraulikpumpe (1) versorgt wird, wobei die Hydraulikpumpe (1) im stationären Zustand, der von einem Steuerorgan geregelt wird, eine bestimmte Durchflussmenge von Hydraulikfluid an den Hydraulikmotor (2) liefert, **dadurch gekennzeichnet, dass** diese Steuervorrichtung mindestens aufweist:

- Messeinrichtungen des Drucks des Hydraulikfluids am Eingang (P_av) bzw. am Ausgang (P_ret) des Hydraulikmotors (2);
- Einrichtungen zur Ableitung und zur Rückführung (3, 4, 5, 6, 7) des vorübergehenden Durchflussmengenüberschusses (+dQ) der Hydraulikpumpe (1) bzw. (-dQ) des Hydraulikmotors (2) abhängig vom gemessenen Druck des Hydraulikfluids entweder von der Hydraulikpumpe (1) oder vom Hydraulikmotor (2) zur Rückleitung bzw. Eingangsleitung des Hydraulikmotors (2).

**5.** Vorrichtung nach Anspruch 4, **dadurch gekennzeichnet, dass** die Messeinrichtungen des Drucks mindestens aufweisen:

- einen Drucksensor (P_av) des Hydraulikfluids, der in Eingriff auf der Eingangsleitung bzw. der Rückleitung (P_ret) der Versorgung des Hydraulikmotors (2) angeordnet ist;
- eine Messverwaltungs- und Steuerungs-Zentraleinheit (ECU), die jeden Drucksensor verwaltet.

**6.** Vorrichtung nach einem der Ansprüche 4 oder 5, **dadurch gekennzeichnet, dass** die Ableitungs- und Rückführungseinrichtungen des vorübergehenden Durchflussmengenüberschusses der Hydraulikpumpe (1) bzw. des Hydraulikmotors (2) mindestens enthalten:

- einen ersten Zweig, der von einem ersten (3) und einem zweiten (5) Rückschlagventil geformt wird, die gemäß einer ersten gleichen Zirkulationsrichtung des Hydraulikfluids angeschlossen und mittels eines Proportionaldruckregelkreises (4) des Hydraulikfluids verbunden sind;
- einen zweiten Zweig, der von einem ersten (6) und einem zweiten (7) Rückschlagventil geformt wird, die gemäß einer zweiten gleichen Zirkulationsrichtung des Hydraulikfluids angeschlossen sind, wobei die zweite Zirkulationsrichtung der ersten Zirkulationsrichtung entgegengesetzt ist; wobei das erste (6) und das zweite (7) Rückschlagventil des zweiten Zweigs durch den Proportionaldruckregelkreis (4) verbunden sind, wobei der erste Zweig, der zweite Zweig und der Proportionaldruckregelkreis (4) gemäß einer Schaltbrücke konfiguriert sind.

7. Vorrichtung nach einem der Ansprüche 4 bis 6, **dadurch gekennzeichnet, dass** für eine Hochschaltsteuerung der Getriebegänge des Automatikgetriebes (Fig. 4) diese Vorrichtung außerdem einen Druckregelungsblock (BR) aufweist,

- wenn (100+) der Druck (P_av) des Hydraulikfluids in der Eingangsleitung höher als der Druck (P_ret) des Hydraulikfluids in der Rückleitung ist, wobei die Hubraum-Umschaltung durch Hubraumverkleinerung erfolgt:

- wird der aufgrund der Umschaltung nach einem Gangwechsel aufgebaute neue Druck berechnet (101);
- wird der berechnete aufgebaute neue Druck als Sollwert (Pcons = NP) an den Druckregelungsblock übertragen (102), dann die Umschaltung (103) ausgeführt; und bei Erreichen (104) ihres aktiven Hubraumsollwerts durch die Hydraulikpumpe (1),
- wird der Drucksollwert auf den maximalen Wert (Pcons = Pmax) und der aktive Hubraumsollwert (Ccyl) der Hydraulikpumpe (1) entsprechend der Stellung des Steuerorgans (M) gemäß einem klassischen Betrieb angehoben (105); sonst,

- wenn (100-) der Druck des Hydraulikfluids in der Eingangsleitung (P_av) niedriger als der Druck des Hydraulikfluids (P_ret) in der Rückleitung ist, wobei die Hubraum-Umschaltung durch Hubraumverkleinerung erfolgt:

- wird ein Speisedruckwert (Pg) als Sollwert (Pcons = Pg) an den Druckregelungsblock übertragen (107), dann die Umschaltung ausgeführt (108); und bei Erreichen (109) ihres aufgebauten aktiven Hubraumsollwerts (Acyl=Ccyl) durch die Hydraulikpumpe (1),
- wird der Solldruck auf den maximalen Druck (Pcons = Pmax) wieder hergestellt (110), und wird der Hubraumsollwert der Hydraulikpumpe entsprechend der Stellung des Steuerorgans (M) gemäß der klassischen Betriebsart nacheinander zwischen jedem Getriebegang angehoben (111).

8. Vorrichtung nach einem der Ansprüche 4 bis 7, **dadurch gekennzeichnet, dass** für eine Herunterschaltsteuerung der Getriebegänge (Vx) des Getriebes ohne Forderung einer Geschwindigkeitsabbremsung in normaler Situation (Fig. 4b):

- wenn (200) der Druck des Hydraulikfluids (P_av) in der Eingangsleitung höher als der maximale Druck (Pmax) ist, und wenn die Drehzahl (Nm) des Dienstmotors höher als die Umschaltdrehzahl (Nc) ist, die Drehzahl des Dienstmotors auf die Umschaltdrehzahl (Nm = Nc) zurückgebracht wird (201), und für Punkte einer nachfolgenden aktiven Hubraum-Umschaltung entsprechend einem aktiven Hubraum der Hydraulikpumpe (1) kleiner als der maximale Hubraum, wobei die aktive Hubraum-Umschaltung durch Hubraumvergrößerung erfolgt:

- der Speisedruckwert (Pg) als Sollwert (Pcons=Pg) an den Druckregelungsblock (BR) übertragen wird (202); und sobald die Hydraulikpumpe (1) den maximalen Hubraumsollwert (Acyl = Ccyl) erreicht hat, der Drucksollwert auf den maximalen Druck (Pcons = Pmax) angehoben wird (205); sonst,

- wenn (206) der Rücklaufdruck (P_ret) des Hydraulikfluids höher als der maximale Druck (Pmax) ist, und wenn die Drehzahl (Nm) des Dienstmotors höher als die Umschaltdrehzahl (Nc) ist, die Drehzahl des Dienstmotors auf die Umschaltdrehzahl (Nm = Nc) zurückgebracht wird; und für Punkte der nachfolgenden aktiven Hubraum-Umschaltung entsprechend einem maximalen aktiven Hubraum, und wobei die aktive Hubraum-Umschaltung durch Hubraumvergrößerung erfolgt:

- der aufgrund der Umschaltung nach Gangwechsel aufgebaute neue Druck (NP) berechnet wird (208); und
- der berechnete neue Druckwert (NP) als Sollwert (Pcons = NP) an den Regelungsblock (BR) übertragen wird (209); und sobald die Pumpe (1) ihren maximalen aktiven Hubraumsollwert (Acyl=Ccyl) erreicht hat (211)

- der Drucksollwert (Pcons) auf den maximalen Druckwert (Pmax), (Pcons = Pmax) gemäß einer klassischen Betriebsart angehoben wird (212).

9. Vorrichtung nach einem der Ansprüche 4 bis 8, **dadurch gekennzeichnet, dass** bei einer anormalen Situation (Fig. 4c) des Durchdrehens (OR) des Dienstmotors:

- der aktive Hubraum der Hydraulikpumpe (1) reduziert wird (300), um einen Druckanstieg der Versorgungsleitung zu bewirken, indem das Durchdrehen (OR) direkt oder durch aufeinanderfolgenden Übergang auf die unteren Getriebegänge bis zum Verschwinden des Durchdrehens (OR) beseitigt wird, und nach einem Getriebegangwechsel (301)

- der Drucksollwert (Pcons) durch Steuerung ausgehend von der Steuerungs- und Verwaltungs-Zentraleinheit (ECU) durch Verfolgen einer Bremsrampe bis zum Verschwinden des Durchdrehens (OR=0) angehoben wird (302).

10. Vorrichtung nach einem der Ansprüche 4 bis 9, **dadurch gekennzeichnet, dass** bei einer anormalen Situation der Istgeschwindigkeit (Vr) des Fahrzeugs höher als eine theoretische Geschwindigkeit (Vt) (Fig. 4d), bei Ausfall des hydrostatischen Rückhalts

- der Dienstmotor in den Leerlauf (Nm = Nr) versetzt wird (400);

- der aktive Hubraum (Acyl) der Hydraulikpumpe (1) auf seinen minimalen Wert (Acylmin) gebracht wird (401);

- der Drucksollwert (Pcons) mittels der Steuerungs- und Verwaltungs-Zentraleinheit (ECU) auf seinem maximalen Wert (Pmax) (Pcons = Pmax) festgelegt wird;

- die Stromversorgung (EP = 0) der Spule des Verriegelungsverteilers der Druckregelung und des Bremsverteilers unterbrochen wird (403).

11. Vorrichtung nach einem der Ansprüche 4 bis 10, **dadurch gekennzeichnet, dass** für eine Herunterschaltsteuerung der Getriebegänge (Vx) des Getriebes mit normaler Geschwindigkeitsabbremsung (Vr) (Fig. 4e):

- das Steuerorgan (M) auf eine Geschwindigkeitsverringerung gesetzt wird (500), um den Anfang eines reduzierten Schleppabstands zwischen der theoretischen Bewegungsgeschwindigkeit und der Istgeschwindigkeit des Fahrzeugs zu erzeugen; und wenn (501+) die Drehzahl (Nm) des Dienstmotors höher als die Umschaltdrehzahl (Nc) ist, die Drehzahl des Dienstmotors auf die Drehzahl (Nc) des Umschaltens (Nm = Nc) zurückgebracht wird (502), und für Punkte der nachfolgenden aktiven Hubraum-Umschaltung entsprechend einem aktiven Hubraum der Hydraulikpumpe kleiner als der maximale Hubraum,

- wenn (503+) der Druck des Hydraulikfluids in der Eingangsleitung (Pav) höher als der Druck (Pret) des Hydraulikfluids in der Rückleitung ist, wobei die aktive Hubraum-Umschaltung durch Hubraumvergrößerung erfolgt:

- der Speisedruckwert (Pg) als Drucksollwert (Pcons) (Pcons = Pg) an den Druckregelungsblock (BR) übertragen wird (504), dann die Umschaltung ausgeführt wird (505), und sobald die Hydraulikpumpe (1) den maximalen Hubraumsollwert (Acyl = Ccyl) erreicht (506+), der Drucksollwert (Pcons) auf den maximalen Druckwert (Pmax) (Pcons = Pmax) angehoben wird (507); sonst

- wenn (503-) der Druck (P_ret) des Hydraulikfluids in der Rückleitung höher als der Druck (Pav) des Fluids in der Eingangsleitung ist, wobei die aktive Hubraum-Umschaltung durch Vergrößerung des Hubraums erfolgt:

- der aufgrund der Umschaltung nach Gangwechsel aufgebaute neue Druck (NP) berechnet wird (508); und

- der berechnete neue Druckwert (NP) als Sollwert (Pcons) an den Druckregelungsblock (BR) übertragen wird (509); und sobald die Hydraulikpumpe (1) ihren maximalen aktiven Hubraumsollwert (Acyl = Ccyl) erreicht hat,

- der Drucksollwert (Pcons) auf den maximalen Druckwert (Pmax) gemäß einer klassischen Betriebsart angehoben wird (512).

12. Vorrichtung nach einem der Ansprüche 4 bis 11, **dadurch gekennzeichnet, dass** für eine Herunterschaltsteuerung der Getriebegänge (Vx) des Getriebes mit abrupter Geschwindigkeitsabbremsung (Vr) (Fig. 4f):

- das Steuerorgan (M) in einer Zwischenstellung angeordnet wird (600), um den Beginn eines großen Schleppabstands zwischen der theoretischen Bewegungsgeschwindigkeit und der Istgeschwindigkeit des Fahrzeugs zu erzeugen; und

- wenn (601+) der Druck (Pav) des Hydraulikfluids in der Eingangsleitung höher als der Druck (P_ret) des Hydraulikfluids in der Rückleitung ist, wobei die aktive Hubraum-Umschaltung durch Hubraumverkleinerung erfolgt,

- direkt in den der Stellung des Steuerorgans (M) entsprechenden Gang übergegangen wird (602);

- vor der Umschaltung (604) ein Druckwert gleich dem Speisedruck (Pg) als Sollwert (Pcons) (Pcons = Pg) an den Druckregelungsblock (BR) übertragen wird;

- der aktive Hubraum (Acyl) der Hydraulikpumpe (1) direkt verkleinert wird (605), um den aktiven Hubraum dieser letzteren auf den Wert desjenigen zu bringen, der der aktuellen Stellung des Steuerorgans (M) entspricht; und gleichzeitig

- der Drucksollwert (Pcons) an der Steuer- und Verwaltungs-Zentraleinheit (ECU) mit einer schnellen Druckrampe unabhängig von der hydrostatischen Verzögerungsrampe angehoben wird (605); sonst,

- wenn (601-) der Druck (P_av) des Hydraulikfluids in der Eingangsleitung niedriger als der Druck (P_ret) des Hydraulikfluids in der Rückleitung ist;

- direkt in den Gang entsprechend der Stellung des Steuerorgans (M) übergegangen wird (606);

- vor der Umschaltung (609) der aufgrund des Gangwechsels aufgebaute neue Druck (NP) berechnet (607) und dieser an den Solldruck (Pcons = NP) angewendet wird (608);

- der aktive Hubraum der Hydraulikpumpe (Acyl) direkt gemäß der klassischen Betriebsrampe auf den der aktuellen Stellung des Steuerschalters (M) entsprechenden Wert verkleinert wird (610); und gleichzeitig

- der Drucksollwert (Pcons) am Druckregelungsblock bis auf sein Maximum (Pmax) angehoben wird, mit einer schnellen Rampe unabhängig von der hydrostatischen Verzögerungsrampe.

13. Vorrichtung nach einem der Ansprüche 4 bis 12, **dadurch gekennzeichnet, dass** für eine Herunterschaltsteuerung des Getriebegangs (Vx) des Getriebes mit abrupter vollständiger Geschwindigkeitsabbremsung (Vr) (Fig. 4g):

- das Steuerorgan (M) in die neutrale Stellung (0) gebracht wird (700); und

- wenn (701+) der Druck (P_av) des Hydraulikfluids in der Eingangsleitung höher als der Druck (P_ret) des Hydraulikfluids in der Rückleitung ist, wobei die aktive Hubraum-Umschaltung durch Hubraumverkleinerung erfolgt,

- vor der Umschaltung (703) ein Drucksollwert (Pcons) gleich dem Speisedruck (Pg) übertragen wird, und zur Durchführung eines schnellen Bremsens

- der Hubraum (Acyl) der Hydraulikpumpe (1) direkt gemäß einer bestimmten Rampe verkleinert wird (704),

- der aktive Hubraum (Acyl) der Hydraulikpumpe (1) auf den Wert Null gebracht wird (705), und gleichzeitig

- der an den Regelungsblock (BR) angewendete Drucksollwert (Pcons) auf seinen maximalen Wert (Pmax) angehoben wird (705), mit einer schnellen Druckrampe unabhängig von der hydrostatischen Verzögerungsrampe; sonst

- wenn (701-) der Druck (P_av) des Hydraulikfluids in der Eingangsleitung niedriger als der Druck (P_ret) des Hydraulikfluids in der Rückleitung ist,

- vor der Umschaltung (708) der aufgrund des Gangwechsels aufgebaute neue Druck (NP) berechnet (706) und an den Regelungsblock (BR) angewendet wird (707);

- der aktive Hubraum (Acyl) der Hydraulikpumpe (1) direkt gemäß einer klassischen Rampe verkleinert wird (709), um den aktiven Hubraum der Hydraulikpumpe auf den Wert Null zu bringen; und gleichzeitig

- der Drucksollwert (Pcons) an der Steuer- und Verwaltungs-Zentraleinheit bis auf sein Maximum (Pmax) mit einer schnellen Rampe, unabhängig von der hydrostatischen Verzögerungsrampe, angehoben wird (710).

14. Vorrichtung nach einem der Ansprüche 4 bis 13, **dadurch gekennzeichnet, dass** für ein Fahrzeug, das große Steigungen befahren kann, der aktive Hubraumsollwert der Hydraulikpumpe auf seinem Wert gehalten wird.

15. Computerprogramm, das das Verfahren nach den Ansprüchen 1 bis 3 bzw. die Vorrichtung nach einem der Ansprüche 4 bis 14 anwendet, wobei dieses Anweisungen enthaltende Computerprogramm auf einem Speicherträger gespeichert wird und von einem dedizierten Computer oder Rechner ausführbar ist, der sich an Bord eines Fahrzeugs befindet, das mit einer hydraulischen Übersetzung und mit einem automatischen Hydraulikgetriebe versehen ist, das mit einer Pumpe (1) und mit einem Hydraulikmotor (2) mit variablem Hubraum ausgestattet ist, **dadurch gekennzeichnet, dass** bei der Ausführung dieses Programms und dieser Anweisungen letztere die Messung des Drucks (P_av) des Hydraulikfluids am Eingang und am Ausgang (P_ret) des Hydraulikmotors (2) und die Druckregelungssteuerung entweder ausgehend von einem Speisedruck (Pg) oder ausgehend vom aufgrund der Hubraum-Umschaltung berechneten neuen Druck (NP) des Hydraulikfluids erlauben.

## Claims

1. A method for controlling an automatic hydraulic gearbox equipped with a hydraulic pump (1) and at least one hydraulic motor(2) with adjustable displacement, the hydraulic motor(2) being supplied with hydraulic fluid by an input circuit and a return circuit from the hydraulic pump (1) mechanically coupled to a service motor, the hydraulic pump (1) delivering, in steady state operation, a determined flow of hydraulic fluid to the hydraulic motor(2), **characterized in that** this method consists in at least:

   - measuring (A)the pressure of the hydraulic fluid on the input ($P\_av$), respectively output($P\_ret$), circuit of the hydraulic motor (2), and, upon reduction, respectively increase, of the active displacement of the hydraulic motor(2) by displacement switching, causing (C)a temporary excess flow(+dQ) of hydraulic fluid from the hydraulic pump(1) to the hydraulic motor (2), respectively a temporary excess flow (-dQ)of hydraulic fluid from the hydraulic motor(2) to the hydraulic pump(1),
   - diverting (D)the temporary excess flow(+dQ) from the hydraulic pump(1), respectively (-dQ) from the hydraulic motor(2), according to the measured pressure of the hydraulic fluid; and,
   - recycling (E,F) the temporary excess flow of hydraulic fluid(+dQ,-dQ), either from the pump (1) or respectively from the hydraulic motor(2), to the return, respectively input, circuit of the hydraulic motor (2).

2. The method as claimed in claim 1, **characterized in that** the operation consisting in measuring (A) the pressure of the hydraulic fluid is executed at least before each active displacement switching of the hydraulic motor.

3. The method as claimed in claim 1 or 2, **characterized in that** the hydraulic fluid pressure measurement operation (A) is performed substantially continuously.

4. A device for controlling an automatic hydraulic gearbox equipped with a hydraulic pump(1) and at least one hydraulic motor(2) with adjustable displacement, the hydraulic motor(2) being supplied by an input circuit and by a return circuit from the hydraulic pump(1) coupled to a service motor, the hydraulic pump(1) delivering, in steady state operation, set by a control member, a determined flow of hydraulic fluid to the hydraulic motor(2), **characterized in that** this control device comprises at least:

   - means for measuring the pressure of the hydraulic fluid at the input($P\_av$), respectively at the output, ($P\_ret$)of the hydraulic motor (2);
   - means (3,4,5,6,7)for diverting and recycling the temporary excess flow (+dQ) from the hydraulic pump(1), respectively (-dQ)from the hydraulic motor(2), according to the measured pressure of the hydraulic fluid, either from the hydraulic pump(1) or respectively from the hydraulic motor(2), to the return, respectively input, circuit of the hydraulic motor (2) .

5. The device as claimed in claim 4, **characterized in that** the means for measuring the pressure comprise at least:

   - a hydraulic fluid pressure sensor($P\_av$) tap-connected to the supply input, respectively return, circuit ($P\_ret$)of the hydraulic motor(2);
   - a central measurement management and control unit (ECU)managing each pressure sensor.

6. The device as claimed in one of claims 4 or 5, **characterized in that** the means for diverting and recycling the temporary excess flow from the hydraulic pump(1), respectively from the hydraulic motor(2), comprise at least:

   - a first branch formed by a first(3) and a second (5)non-return valve connected according to a first same direction of circulation of the hydraulic fluid and linked via a proportional hydraulic fluid pressure control circuit(4);
   - a second branch formed by a first(6) and a second (7)non-return valve connected according to a second same direction of circulation of the hydraulic fluid, the second direction of circulation being opposite to the first direction of circulation; the first(6) and the second(7) non-return valves of the second branch being linked by the proportional pressure control circuit(4), the first branch, the second branch and the proportional pressure control circuit(4) being configured as a bridge circuit.

7. The device as claimed in one of claims 4 to 6, **characterized in that**, for a gear-up command for the automatic gearbox(Fig.4), this device also comprising a pressure regulation block(BR),

   - if(100+) the pressure ($P\_av$) of the hydraulic fluid in the input circuit is greater than the pressure($P\_ret$) of the hydraulic fluid in the return circuit, the displacement switching being done in displacement reduction mode:

      -- the new pressure, established because of the switching after the change of gear, is computed (101);
      -- the established computed new pressure is transmitted(102) as setpoint value (Pcons=NP) to the pressure regulation block then the switching(103) is performed; and, when(104) the hydraulic pump(1) reaches its active displacement setpoint value,
-- the pressure setpoint value is raised(105) to the maximum value(Pcons=Pmax) and the active displacement setpoint value (Ccyl)of the hydraulic pump(1) according to the position of the control member(M), according to a conventional mode of operation; otherwise,

- if (100-)the pressure of the hydraulic fluid in the input circuit (P_av) is less than the hydraulic fluid pressure in the return circuit(P_ret), the displacement switching being done in displacement reduction mode:

    -- a supercharging pressure value is transmitted(107) as setpoint value(Pcons=Pg) to the pressure regulation block then the switching(108) is performed; and, when the hydraulic pump(1) reaches(109) its established active displacement setpoint (Acyl=Ccyl),
    -- the setpoint pressure is restored (110) to the maximum pressure(Pcons=Pg) and the displacement setpoint of the hydraulic pump is raised (111) according to the position of the control member(M) according to the conventional mode of operation, in succession between each gear ratio.

8. The device as claimed in one of claims 4 to 7, **characterized in that**, for a gear-down command (Vx)for the gearbox without a request to slow down, in a normal situation (Fig.4b):

- if (200) the pressure (P_av) of the hydraulic fluid in the input circuit is greater than the maximum pressure(Pmax) and if the speed (Nm)of the service motor is greater than the switching speed(Nc), the speed of the service motor is adjusted (201) to the switching speed(Nm=Nc) and, for successive active displacement switching points corresponding to an active displacement of the hydraulic pump(1) less than the maximum displacement, the active displacement switching being done in displacement increase mode:

    -- the supercharging pressure value is transmitted(202) as setpoint value (Pcons=Pg) to the pressure regulation block(BR); and, when the hydraulic pump (1) has reached the maximum displacement setpoint value(Acyl=Ccyl), the pressure setpoint value is raised (205) to the maximum pressure(Pcons=Pmax); otherwise,

- if (206)the return pressure (P_ret) of the hydraulic fluid is greater than the maximum pressure(Pmax), and if the speed (Nm)of the service motor is greater than the switching speed(Nc), the speed of the service motor is adjusted to the switching speed(Nm=Nc); and, for successive active displacement switching points corresponding to a maximum active displacement and the active displacement switching being done in displacement increase mode:

    -- the new pressure(NP), established because of the switching after the change of gear, is computed (208); and,
    -- the new pressure value(NP)computed as the pressure setpoint value(Pcons=NP) is transmitted (209) as setpoint value to the regulation block(BR); and, when the pump (1) has reached (211) its maximum active displacement setpoint value(Acyl=Ccyl),
    -- the pressure setpoint value (Pcons) is raised(212) to the maximum pressure value (Pmax),(Pcons=Pmax) according to a conventional mode of operation.

9. The device as claimed in one of claims 4 to 8, **characterized in that**, in an abnormal situation (Fig.4c) of racing (OR) of the service motor:

- the active displacement of the hydraulic pump (1) is reduced (300) to provoke a rise in pressure of the supply circuit by eliminating the racing (OR) directly or by successively switching to lower gear ratios, until the racing (OR) disappears, and after a change of gear ratio (301):
- the pressure setpoint (Pcons) is raised(302) by a command from the central control and management unit (ECU) according to a braking ramp, until the racing disappears (OR=0) .

10. The device as claimed in one of claims 4 to 9, **characterized in that**, in an abnormal situation of actual speed (Vr)of the vehicle greater than a theoretical speed(Vt)(Fig.4d), on failure of the hydrostatic restraint,

- the service motor is set(400) to idle speed (Nm=Nr) ;
- the active displacement(Acyl) of the hydraulic pump (1) is adjusted to its minimum value (Acylmin);
- the pressure setpoint value (Pcons) is set(402) via the central control and management unit (ECU) to its maximum value(Pmax)(Pcons=Pmax);
- the electrical power supply(EP) to the coil of the pressure regulation locking distributor and the braking distributor is cut (403) (EP=0).

11. The device as claimed in one of claims 4 to 10, **characterized in that**, for a gear-down command (Vx)for the gearbox with normal speed slow-down(Vr):

- the control member(M) is set(500) to speed reduction mode to bring about a reduced tracking difference between the theoretical speed of displacement and the actual speed of the vehicle; and if(501+) the speed(Nm)of the service engine is greater than the switching speed(Nc), the speed(Nm) of the service engine is adjusted (502) to the switching speed(Nm=Nc) and, for successive active displacement switching points corresponding to an active displacement of the hydraulic pump less than the maximum displacement,
- if(503+) the pressure of the hydraulic fluid in the input circuit (P_av) is greater than the pressure of the hydraulic fluid in the return circuit(P_ret), the active displacement switching being done in displacement increase mode:

-- the supercharging pressure value(Pg) is transmitted(504) as pressure setpoint value (Pcons)(Pcons=Pg) to the pressure regulation block(BR) then the switching is performed (505), and, when the hydraulic pump (1) reaches(506+) the maximum displacement setpoint value(Acyl=Ccyl), the pressure setpoint value (Pcons) is raised (507) to the maximum pressure value (Pmax)(Pcons=Pmax); otherwise,

- if(503-) the pressure of the hydraulic fluid in the return circuit (P_ret) is greater than the pressure of the fluid in the input circuit (P_av), the active displacement switching being done in displacement increase mode:

-- the new pressure(NP), established because of the switching after the change of gear, is computed (508); and,
-- the new computed pressure value(NP) is transmitted (509) as setpoint value (Pcons) to the pressure regulation block(BR); and, when the hydraulic pump (1) has reached its maximum active displacement setpoint value (Acyl=Ccyl) ,
-- the pressure setpoint value (Pcons) is raised(512) to the maximum pressure value (Pmax) according to a conventional mode of operation.

12. The device as claimed in one of claims 4 to 11, **characterized in that**, for a gear-down command(Vx) for the gearbox with abrupt speed slow-down(Vr)(Fig. 4f):

- the control member(M) is set(600) to the intermediate position to bring about a significant tracking difference between the theoretical speed of displacement and the actual speed of the vehicle; and,
- if(601+) the pressure of the hydraulic fluid in the input circuit (P_av) is greater than the pressure of the hydraulic fluid in the return circuit(P_ret), the active displacement switching being done in displacement reduction mode,

-- there is an immediate switch(602) to the gear corresponding to the position of the control member(M);
-- prior to the switch(604), a pressure value equal to the supercharging pressure(Pg) is transmitted as setpoint value(Pcons) (Pcons=Pg) to the pressure regulation block(BR);
-- the active displacement of the hydraulic pump(1) is immediately reduced(605) to adjust the active displacement thereof to the value of that corresponding to the current position of the control member(M); and, simultaneously,
-- the pressure setpoint (Pcons) is raised (605) on the central control and management unit(ECU) with a rapid pressure ramp independent of the hydrostatic deceleration ramp; otherwise,

- if(601-) the pressure of the hydraulic fluid in the input circuit (P_av) is less than the pressure of the hydraulic fluid in the return circuit (P_ret) ;

-- there is an immediate switch(606) to the gear corresponding to the position of the control member(M);
-- prior to the switch(609), the new pressure (NP), established because of the change of gear, is computed (607) and thus applied (608) as the pressure setpoint(Pcons=NP);
-- the active displacement(Acyl) of the hydraulic pump(1) is immediately reduced (610) according to the conventional operating ramp to the value corresponding to the current position of the manipulator (M); and, simultaneously,
-- the pressure setpoint(Peons) is raised on the pressure regulation block to its maximum(Pmax), with a rapid ramp independent of the hydrostatic deceleration ramp.

**13.** The device as claimed in one of claims 4 to 12, **characterized in that**, for a gear-down command(Vx) for the gearbox with total abrupt speed slow-down (Vr) (Fig. 4g) :

- the control member(M) is set(700) to the neutral position(0); and,
- if(701+) the pressure of the hydraulic fluid in the input circuit (P_av) is greater than the pressure of the hydraulic fluid in the return circuit(P_ret), the active displacement switching being done in displacement reduction mode,

-- prior to the switch(703), a pressure setpoint value (Pcons) equal to the supercharging pressure(Pg) is transmitted, and, in order to perform a rapid braking,
-- the displacement(Acyl) of the hydraulic pump(1) is immediately reduced(704) according to a determined ramp,
-- the active displacement(Acyl) of the hydraulic pump(1) is adjusted (705) to the zero value, and, simultaneously,
-- the pressure setpoint value (Pcons) applied to the regulation block(BR) is raised (705) to its maximum value(Pmax), with a rapid pressure ramp independent of the hydrostatic deceleration ramp; otherwise,

- if (701-) the pressure of the hydraulic fluid in the input circuit (P_av) is less than the pressure of the hydraulic fluid in the return circuit(P_ret),

-- prior to the switch (708), the new pressure (NP), established because of the change of gear, is computed (706) and applied (707) to the regulation block(BR);
-- the active displacement(Acyl) of the hydraulic pump(1) is immediately reduced (709) according to a conventional ramp to adjust the active displacement of the hydraulic pump to the zero value; and, simultaneously,
-- the pressure setpoint (Pcons) is raised (710) on the central control and management unit to its maximum (Pmax) with a rapid ramp, independent of the hydrostatic deceleration ramp.

**14.** The device as claimed in one of claims 4 to 13, **characterized in that**, for a vehicle likely to negotiate steep slopes, the active displacement setpoint of the hydraulic pump maintains its value.

**15.** A computer program implementing the method as claimed in one of claims 1 to 3, respectively the device as claimed in one of claims 4 to 14, this computer program comprising instructions that are stored in a storage medium and that can be executed by a dedicated computer embedded in a vehicle provided with a hydraulic transmission and an automatic hydraulic gearbox equipped with a pump(1) and a hydraulic motor(2) with adjustable displacement, **characterized in that**, when this program and these instructions are executed, the latter make it possible to measure the pressure of the hydraulic fluid at the input (P_av) and at the output (P_ret) of the hydraulic motor(2) and the pressure regulation control, either on the basis of a supercharging pressure (Pg), or on the basis of the new pressure (NP) of the hydraulic fluid computed because of the displacement switching.

Q

Mesurer   P_av
          P_ret        fe          A

B

Cyl          --

E                              F
Recycler                    Recycler

+dQ                            -dQ
+                                      C
Q  +/- dQ

Dériver +/- dQ                    D

+dQ                              -dQ

**Fig. 1a**

P-ret

Q2

6
1                    4              5
             Ppe                              Mot        2

3                    Q1              7

Qpp                Qmot

P-av

**Fig. 1b**

Fig. 2

Fig 3

Fig. 4c

Fig. 4d

Fig 4a

Fig 4b

Fig 4e

Fig. 4f

Fig. 4g

**EP 2 448 781 B1**

## RÉFÉRENCES CITÉES DANS LA DESCRIPTION

### Documents brevets cités dans la description

- JP 63305033 A